Europäisches Patentamt

(19) European Patent Office

Office européen des brevets

(11) EP 0 896 440 A2

(12) **EUROPEAN PATENT APPLICATION**

(43) Date of publication:
10.02.1999 Bulletin 1999/06

(51) Int. Cl.6: **H04B 7/08**

(21) Application number: 98114748.1

(22) Date of filing: 05.08.1998

(84) Designated Contracting States:
AT BE CH CY DE DK ES FI FR GB GR IE IT LI LU
MC NL PT SE
Designated Extension States:
AL LT LV MK RO SI

(30) Priority: 05.08.1997 JP 211068/97

(71) Applicant: SONY CORPORATION
Tokyo (JP)

(72) Inventors:
• Sakoda, Kazuyuki
Shinagawa-ku, Tokyo (JP)
• Suzuki, Mitsuhiro
Shinagawa-ku, Tokyo (JP)

(74) Representative:
Melzer, Wolfgang, Dipl.-Ing. et al
Patentanwälte
Mitscherlich & Partner,
Sonnenstrasse 33
80331 München (DE)

(54) **Diversity receiver for radio communication system and method**

(57) The present invention relates to a receiver (42) for making it possible to accurately restore a transmitted information bit by removing the influence of interference waves. Pilot symbols inserted at the transmission side (41) are extracted from received signals (S48-S51), and weighting factors (S61-S64) for minimizing the interference wave component in accordance with extracted pilot symbols (S52-S55) are calculated to remove the interference wave component from information symbols (S56?S59) by multiplying the information symbols extracted from received signals by the weighting factors. Thereby, even if interference waves are received, it is possible to easily remove the interference wave component from received signals and thus, accurately restore the information bit (S72) transmitted by removing the influence of interference waves.

FIG. 5

**Description**

BACKGROUND OF THE INVENTION

FIELD OF THE INVENTION

The present invention relates to a receiver, radio communication system and communication method to be preferably applied to a radio communication system such as a portable telephone system.

DESCRIPTION OF THE RELATED ART

Some of the conventional radio communication systems of this type are constituted so that the influence of fading received through a transmission line can be removed by setting a plurality of antennas in a receiver and performing a diversity reception. Hereafter, the radio communication system of this type is described below by showing a specific example. A synchronous-detection-based radio communication system for transmitting or receiving digital data by the Time Division Multiple Access (TDMA) method is described below as an example.

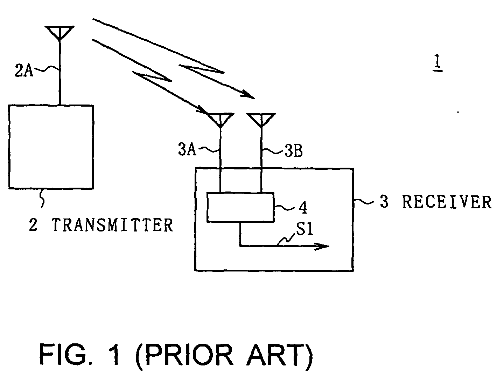

As shown in Fig. 1, the radio communication system 1 of this type comprises a transmitter 2 and a receiver 3, and obtains a received-bit stream S1 removed the influence of fading by diversity-receiving a transmission signal transmitted from an antenna 2A of the transmitter 2 via antennas 3A and 3B of the receiver 3 and signal-processing the signals received via these two antennas 3A and 3B with a received-signal processing section 4.

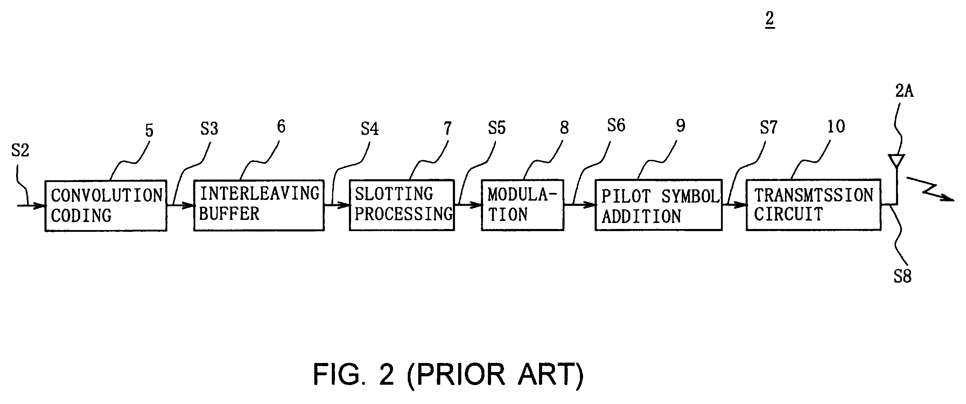

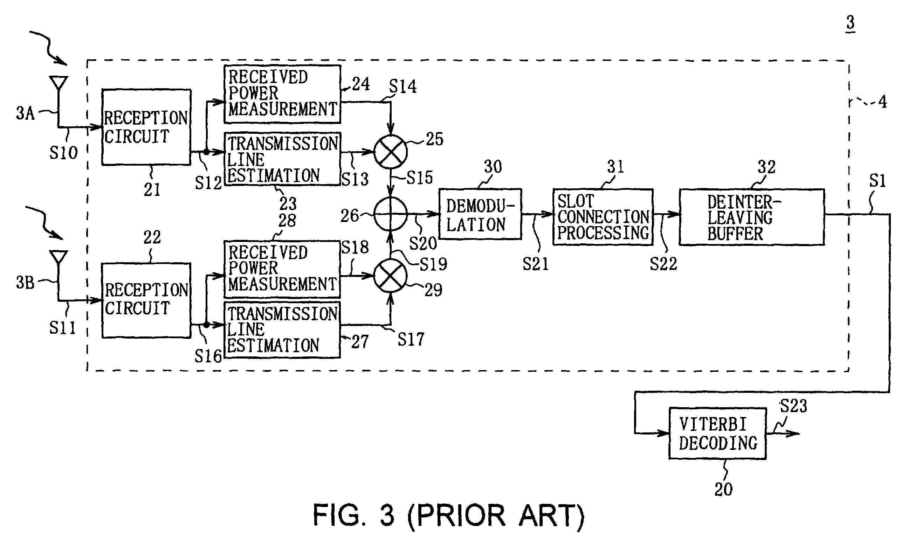

Figs. 2 and 3 show specific structures of the transmitter 2 and the receiver 3 forming the radio communication system 1. As shown in Fig. 2, the transmitter 2 mainly comprises a convolution coding circuit 5, an interleaving buffer 6, a slotting processing circuit 7, a modulation circuit 8, a pilot symbol addition circuit 9, a transmission circuit 10, and the antenna 2A so as firstly to input information bit series S2 serving as transmission data to the convolution coding circuit 5.

The convolution coding circuit 5 comprises predetermined numbers of stages of shift registers and exclusive OR circuits, applies convolution coding to the input information bit series S2, and outputs coded bit series S3 thereby obtained to the interleaving buffer 6. The interleaving buffer 6 stores the coded bit series S3 in its internal storage region in order. When the coded bit series S3 are stored in the entire storage region (when the coded bit series S3 are accumulated up to the desired quantity), the buffer 6 rearranges the sequence of the coded bit series S3 at random (hereafter, the rearrangement of the sequence is referred to as interleaving) and outputs coded bit series S4 thereby obtained to the slotting processing circuit 7. In this connection, the interleaving buffer 6 has a storage capacity for a plurality of slots so that coded bit series are distributed to a plurality of transmission slots.

The slotting processing circuit 7 is a circuit for assigning the coded bit series S4 to time-division-formed transmission slots in accordance with the TDMA method, which classifies the coded bit series S4 into every predetermined number of bits and outputs coded bit groups S5 thereby obtained to the modulation circuit 8 in order. The modulation circuit 8 applies predetermined modulation processing (e.g., synchronous-detection-based modulation processing such as QPSK modulation) to each supplied coded-bit group S5 and outputs information symbol groups S6 thereby obtained to the pilot symbol addition circuit 9.

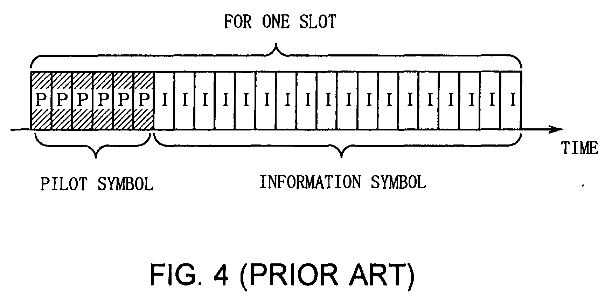

As shown in Fig. 4, the pilot symbol addition circuit 9 adds a pilot symbol P to the head position of each information symbol group S6 classified in accordance with the transmission slot (the head of an information symbol I) as a header and outputs transmission symbol groups S7 thereby obtained to the transmission circuit 10. In this connection, the pilot symbol P added here is a symbol of a pattern previously known at the receiver side and the receiver side is constituted so as to estimate the characteristics (fading state) of a transmission line by using the pilot symbol P.

The transmission circuit 10 applies filtering processing to the transmission symbol groups S7 respectively provided with a pilot symbol P in order, and then applies digital-to-analog conversion processing to the transmission symbol groups S7 to generate transmission signals. Moreover, the transmission circuit 10 generates a transmission signal S8 of a predetermined frequency channel by applying frequency conversion to the transmission signal and amplifies the signal up to a predetermined power, and then transmits the signal through the antenna 2A. Thus, the transmission signal S8 is transmitted from the transmitter 2 synchronously with the timing of a TDMA-type transmission slot.

Moreover, as shown in Fig. 3, the receiver 3 mainly comprises antennas 3A and 3B, a received-signal processing section 4, and a Viterbi decoding circuit 20, receives the transmission signal S8 transmitted from the transmitter 2 via the antennas 3A and 3B, and inputs received signals S10 and S11 thereby obtained to the received-signal processing section 4. The received-signal processing section 4 supplies the received signal S10 to its internal reception circuit 21 and also does the received signal S11 to its internal reception circuit 22.

The reception circuit 21 amplifies the input received signal S10, and then fetches a base band signal by applying frequency conversion to the received signal S10 and applying filtering processing to the base band signal. Then said reception circuit 21 fetches received-symbol groups S12 corresponding to the above-described transmission symbol groups S7 by applying analog-to-digital conversion processing to the base band signal, and outputs the received-symbol groups S12 respectively to a transmission-line estimation circuit 23 and a received-power measurement circuit 24. In this connection, since amplitude components and phase components of the received-symbol groups S12 are fluctuated by the influence of fading through a transmission line, the symbol groups S12 do not always coincide with the transmission symbol groups S7.

The transmission-line estimation circuit 23 is a circuit for examining the characteristics of a transmission line and performing equalization processing corresponding to the examination result. Said transmission-line estimation circuit 23 estimates the characteristics of the transmission line by referring to the pilot symbol P included in the received-symbol groups S12 and calculates the reverse characteristics of the transmission line in accordance with the estimation result. Moreover, the transmission-line estimation circuit 23 removes the influence of fading received through the transmission line by convolution-multiplying the information symbol I of each received-symbol group S12 by a value showing the reverse characteristics of the transmission line in a time domain by using an equivalent circuit comprising an equalizer. Through this processing, the transmission-line estimation circuit 23 generates received information symbol groups S13 corresponding to the information symbol groups S6 and outputs the groups S13 to a multiplier 25.

The received-power measurement circuit 24 measures the power of the input received-symbol groups S12 in accordance with the input received-symbol groups S12 and outputs the received-power value S14 of the groups S12 to the multiplier 25. The multiplier 25 generates received information symbol groups S15 on which the reliability of the received information symbol groups S13 are reflected by multiplying the groups S13 by the received power value S14 supplied from the received-power measurement circuit 24 as a weighting factor showing the reliability of the groups S13, and outputs the groups S15 to an adder 26. In this connection, the reliability of the received information symbol groups S13 is proportional to the received power value S14. Therefore, as the received power value S14 increases, the reliability becomes higher.

In the same way, the reception circuit 22 amplifies the input received signal S11, fetches a base band signal by applying frequency conversion to the received signal S11, applies filtering processing to the base band signal, then fetches received symbol groups S16 corresponding to the above transmission symbol groups S7 by applying analog-to-digital conversion processing to the base band signal, and outputs the groups S16 respectively to the transmission-line estimation circuit 27 and the received power measurement circuit 28. In this connection, the amplitude component and phase component of the received symbol groups S16 are also fluctuated because the groups S16 are influenced by fading. Therefore, the groups S16 do not always coincide with the transmission symbol groups S7. Moreover, since the groups S16 and S7 are not influenced by fading under completely the same state, the groups S16 do not always coincide with the received symbol groups S12.

The transmission-line estimation circuit 27 is also a circuit for examining the characteristics of a transmission line and performing equalization processing corresponding to the examination result, and estimates the characteristics of the transmission line by referring to a pilot symbol P included in the received symbol groups S16 and further calculates the reverse characteristics of the transmission line in accordance with the estimation result. Moreover, the transmission-line estimation circuit 27 removes the influence of fading received through the transmission line by convolution-multiplying each information symbol I of the received symbol groups S16 by the value showing the reverse characteristics of the transmission line in a time domain by using an equivalent circuit comprising an equalizer. Through this processing, the transmission-line estimation circuit 27 generates received information symbol groups S17 corresponding to the transmitted information symbol groups S6 and outputs the group S17 to a multiplier 29.

The received power measurement circuit 28 measures the power of the received symbol groups S16 in accordance with the input received symbol groups S16 and outputs the received power value S18 to the multiplier 29. The multiplier 29 generates received information symbol groups S19 on which the reliability of the received information symbol groups S17 is reflected by multiplying the received information symbol groups S17 by the received power value S18 supplied from the received power measurement circuit 28 as a weighting factor showing the reliability of the received information symbol groups S17, and outputs the groups S19 to the adder 26.

The adder 26 generates synthesized received information symbol groups S20 from which the fluctuation due to fading is removed by synchronizing symbols of the received information symbol groups S15 and S19 on which the reliability is reflected, and adding the groups S15 and S19 together. Thus, the processing for weighting the information symbol groups S13 and S17 received via the antennas 3A and 3B and for adding them is generally referred to as the maximum ratio synthesizing method which is known as one of the strongest signal processing methods against noises and fading, and is relatively complex compared to other methods such as the selective synthesizing method, etc.,.

The synthesized received information symbol groups S20 thus generated are input to a demodulation circuit 30 at the rear stage. The demodulation circuit 30 restores coded bit groups S21 corresponding to the coded bit groups S5 at the transmission side by applying the predetermined demodulation processing to the synthesized received information symbol groups S20, and outputs the restored groups S21 to a slot connection processing circuit 31. In this connection, each bit of the coded bit groups S21 is not a binary signal having a value "0" or "1", but is a multi-valued signal since a noise component is added to each bit through a transmission line. The slot connection processing circuit 31 is a circuit for connecting the coded bit groups S21 obtained fragmentarily in slots so that they serve as continuous signals. The coded bit groups S21 are connected together after the groups S21 are accumulated up to the value equivalent to the storage capacity for a deinterleaving buffer 32 of the rear stage. Then, the slot connection processing circuit 31 outputs coded bit series S22 thereby obtained to the deinterleaving buffer 32.

The deinterleaving buffer 32 has a storage capacity for a plurality of slots, storing the supplied coded bit series S22 in its internal storage region in order, and thereafter, returning the arrangement sequence of the coded bit series S22 to its original arrangement sequence by rearranging the sequence of the coded bit series S22 in accordance with the reverse procedure to the rearrangement procedure performed in the interleaving buffer 6 of the transmitter 2, and outputting coded bit series thereby obtained to the Viterbi decoding circuit 20 as the received bit stream S1 described above (hereafter, returning of the arrangement sequence to the original arrangement sequence is referred to as deinterleaving). The Viterbi decoding circuit 20 comprising a soft-decision Viterbi decoding circuit, restoring and outputting a transmitted information bit series S23 by determining the trellis for convolution coding in accordance with the input coded bit series S1 and estimating the most-probable state (so-called maximum-likelihood series estimation) out of every state transition recognized as probable data. Thus, the receiver 3 avoids the influence of fading received through the transmission line and restores the information bit series S23 transmitted from the transmitter 2.

In case of the conventional receiver 3, the influence of fading is removed by weighting the information symbol groups S13 and S17 received via the antennas 3A and 3B in response to the received power values S14 and S18, adding them together, and thereby performing the maximum ratio synthesis processing. However, when strong same-channel interference waves are present in every slot, it is impossible to obtain the characteristics of the original maximum ratio synthesis because the interference wave power is also identified as received power. Thus the influence of fading can not be avoided satisfactorily, and the information bit series S23 can not be restored accurately.

Moreover, though diversity reception has basically an effect for preventing from decreasing of received power of a desired wave due to fading, it does not have a capacity for canceling interference waves Therefore, the conventional receiver 3 cannot basically eliminate the influence of interference waves. Thus, in case of receiving interference waves, the receiver 3 cannot accurately restore the information bit series S23. Therefore, in the case of the conventional receiver 3, the action against interference waves is still insufficient and it is impossible to restore accurately the information bit series S23.

SUMMARY OF THE INVENTION

In view of the foregoing, an object of this invention is to provide and a receiver, radio communication system and communication method which can remove the influence of interference waves to restore accurately a transmitted information bit.

The nature, principle and utility of the invention will become more apparent from the following detailed description when read in conjunction with the accompanying drawings in which like parts are designated by like reference numerals or characters.

BRIEF DESCRIPTION OF THE DRAWINGS

In the accompanying drawings:

Fig. 1 is a block diagram showing the structure of a conventional radio communication system;
Fig. 2 is a block diagram showing the structure of a conventional transmitter;
Fig. 3 is a block diagram showing the structure of a conventional receiver;
Fig. 4 is a schematic drawing for explaining conventional pilot symbol arrangement;
Fig. 5 is a block diagram showing the structure of a radio communication system to which the present invention is applied;
Fig. 6 is a block diagram showing the structure of a transmitter to which the present invention is applied;
Fig. 7 is a signal-point layout drawing for explaining the theory of QPSK modulation;
Fig. 8 is a signal-point layout drawing for explaining the theory of 8PSK modulation;
Fig. 9 is a signal-point layout drawing for explaining the theory of 16QAM;
Fig. 10 is a signal-point layout drawing for explaining the theory of 64QAM;
Fig. 11 is a schematic drawing for explaining pilot symbol arrangement;
Fig. 12 is a schematic drawing for explaining a transmission symbol after inverse-Fourier-transformed;
Fig. 13 is a block diagram showing the structure of a receiver to which the present invention is applied;
Fig. 14 is a block diagram showing the structure of a weighting-factor calculating section;
Fig. 15 is a flow chart showing the weighting-factor calculation procedure by a weighting-factor calculating section;
Fig. 16 is a block diagram showing the structure of a demodulation circuit corresponding to QPSK modulation;

Fig. 17 is a block diagram showing the structure of a demodulation circuit corresponding to 8PSK modulation;

Fig. 18 is a block diagram showing the structure of a demodulation circuit corresponding to 16QAM;

Fig. 19 is a block diagram showing the structure of a demodulation circuit corresponding to 64QAM;

Fig. 20 is a block diagram showing the structure of a demodulation circuit of the second embodiment;

Fig. 21 is a block diagram showing the structure of a reliability calculation circuit;

Fig. 22 is a block diagram showing the structure of the transmitter of another embodiment;

Fig. 23 is a block diagram showing the structure of the receiver of another embodiment; and

Fig. 24 is a block diagram showing the structure of a differential demodulation circuit.

## DETAILED DESCRIPTION OF THE EMBODIMENT

Preferred embodiments of this invention will be described with reference to the accompanying drawings:

### (1) First Embodiment

#### (1-1) General structure of radio communication system

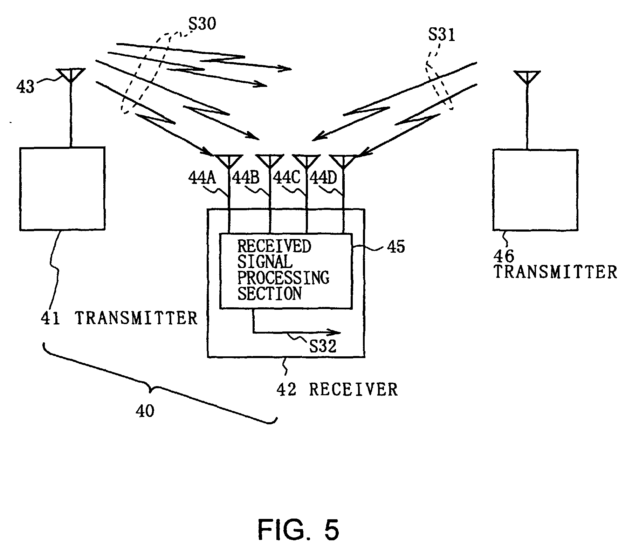

In Fig. 5, symbol 40 denotes a radio communication system to which the present invention is applied as a whole. The radio communication system 40 is constituted with a transmitter 41 and a receiver 42. A transmission signal S30 transmitted through an antenna 43 of the transmitter 41 is received by four antennas 44A-44D of the receiver 42. Moreover, another transmitter 46 for transmitting a transmission signal S31 at the same frequency channel as that of the transmission signal S30 to be transmitted by the transmitter 41 is present nearby the radio communication system 40. The signal S31 transmitted from the transmitter 46 is also received via the antennas 44A-44D as an interference wave. The receiver 42 inputs each signal received via the antennas 44A-44D to its internal received signal processing section 45, and generates a received bit stream S32 from which the influence of the interference wave is removed by removing the interference wave component from each received signal.

In this connection, the receiver 42 eliminates the fading correlation between four received signals received via the antennas 44A-44D by setting the antennas 44A-44D at intervals of more than 1/2 wavelength in accordance with the frequency of the transmission signal S30. Thereby, the receiver 42 effectively performs diversity reception by eliminating the fading correlation between the four received signals. Moreover, in general, diversity reception is an art for removing the influence of fading by synthesizing signals received by a plurality of antennas with a predetermined method. Therefore, when each signal includes the fading correlation, the effect of the diversity reception is theoretically deteriorated. Therefore, in the case of the receiver 42, the arrangement of the four antennas 44A-44D is specified as described above.

Moreover, in case of this radio communication system 40, one frequency channel is constituted with, for example, 24 subcarriers. Therefore, for transmission, information bit series to be transmitted are classified in slots, the information bit series classified for each slot are distributed to and superimposed on the subcarriers so as to perform so-called multicarrier communication of transmitting information bits at the same time by using a plurality of carriers.

#### (1-2) Structure of transmitter

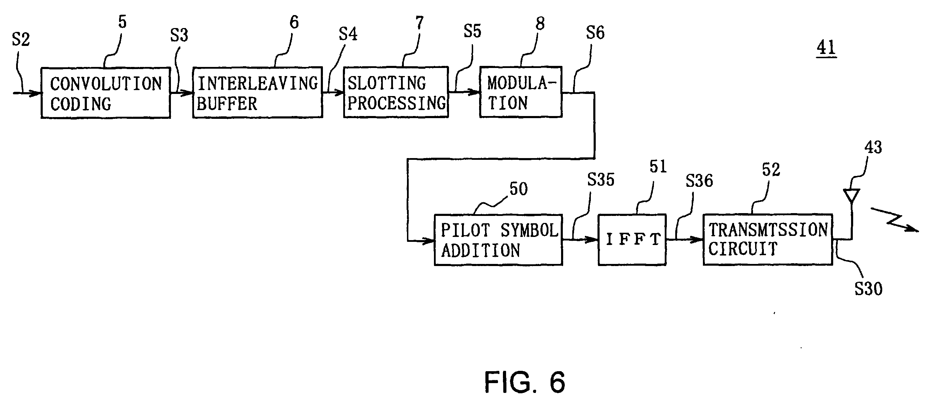

The transmitter 41 of the above-mentioned radio communication system is specifically described below by referring to Fig. 6. As shown in Fig. 6 in which a portion corresponding to that in Fig. 2 is provided with the same symbol, the transmitter 41 mainly comprises a convolution coding circuit 5, an interleaving buffer 6, a slotting processing circuit 7, a modulation circuit 8, a pilot symbol addition circuit 50, an inverse fast Fourier transform circuit (IFFT) 51, a transmission circuit 52, and an antenna 43. The transmitter 41 has a structure almost same as that of the transmitter 2 shown in Fig. 2 except that the inverse fast Fourier transform circuit 51 is added and the processing contents of the pilot symbol addition circuit 50 and transmission circuit 52 are changed.

First, in case of the transmitter 41, the coded bit groups S5 classified by the slotting processing circuit 7 are input to the modulation circuit 8. The modulation circuit 8 applies synchronous-detection-based demodulation processing to the input coded bit groups S5 also in the case of the transmitter 41. The modulation processing includes various modulation methods. For example, Quadrature Phase Shift Keying modulation (QPSK modulation: so-called 4-phase modulation), 8 Phase Shift Keying modulation (8PSK modulation: so-called 8-phase modulation), 16 Quadrature Amplitude Modulation (16QAM: so-called hexadecimal-value orthogonal amplitude modulation), 64 Quadrature Amplitude Modulation (64QAM: so-called hextetra-value orthogonal amplitude modulation) are typical modulation methods.

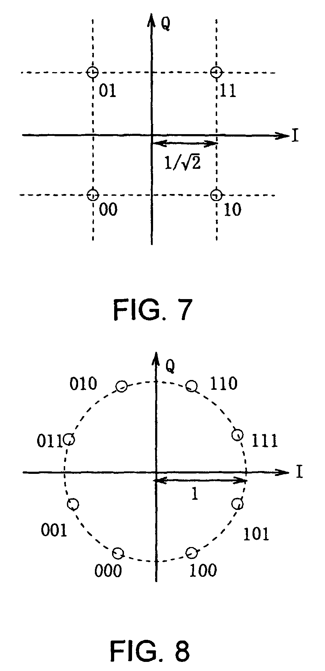

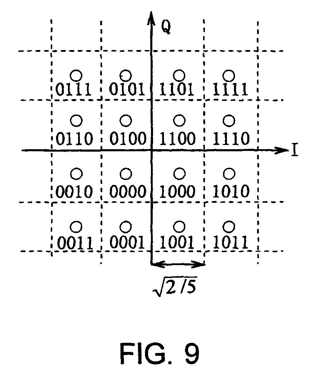

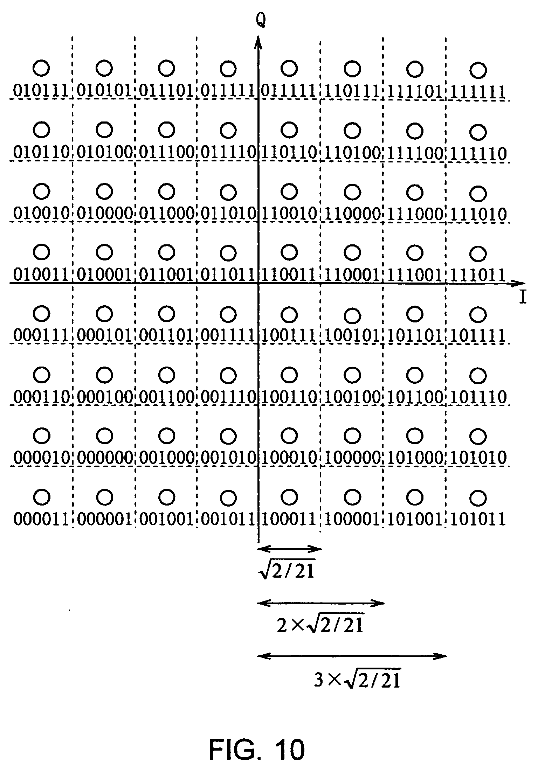

The above-mentioned modulation methods are described below. The QPSK modulation, as shown by the name, is a phase modulation method in which four phase states are present, and as shown in Fig. 7, the information for 2 bits is shown by four signal points (symbols) present at phase values $\pi/4$, $3\pi/4$, $5\pi/4$, and $7\pi/4$. Moreover, the 8QPSK modulation, as shown by the name, is a phase modulation method in which 8 phase states are present, and as shown in Fig. 8, the information for 3 bits is shown by 8 signal points which are present on concentric circles with an amplitude "1" and separate from each other by $\pi/4$. Furthermore, the 16QAM, as shown by the name, is a modulation method in which 16 signal points different from each other in amplitude are present, and as shown in Fig. 9, the information for 4 bits is shown by 16 signal points generated by separating the magnitudes of component I (in-phase component) and component Q (orthogonal component) from each other by thresholds $\pm \sqrt{2/5}$. Furthermore, the 64QAM, as shown by the name, is a modulation method in which 64 signal points different from each other in amplitude are present, and as shown in Fig. 10, the information for 6 bits is shown by 64 signal points generated by separating magnitudes of component I and component Q from each other by thresholds $\pm \sqrt{2/21}$, $\pm 2 \times \sqrt{2/21}$, and $\pm 3 \times \sqrt{2/21}$. In this connection, a numerical value attached to a signal point in Fig. 7 to 10 denotes bit information shown by the signal point.

The modulation circuit 8 applies any one of the above-described modulation processings to each coded bit group S5 and outputs the obtained information symbol groups S6 to the pilot symbol addition circuit 50. The pilot symbol addition circuit 50 is a circuit for adding a pilot symbol P to each information symbol group S6. The transmitter 41 does not add pilot symbols P to the head position of each symbol group but it inserts pilot symbols P between information symbols I constituting symbol groups at equal intervals.

In this connection, because symbols of one slot are distributed to 24 subcarriers as described above, one slot is constituted with 24 symbols including pilot symbols P and information symbols I. A pilot symbol P is a symbol of a previously known pattern at the receiver side. Its amplitude value is "1" and its phase value is random. However, the phase value is randomized so as to be different from other communication, and thereby a pilot symbol P is made different in every communication. That is, because an interference wave component is detected on the basis of a pilot symbol P at the receiver side, and therefore it is impossible to distinguish between signal component and interference wave component of a local office sent from a communication counterpart if the phase value of the pilot symbol P is the same as that of other communication.

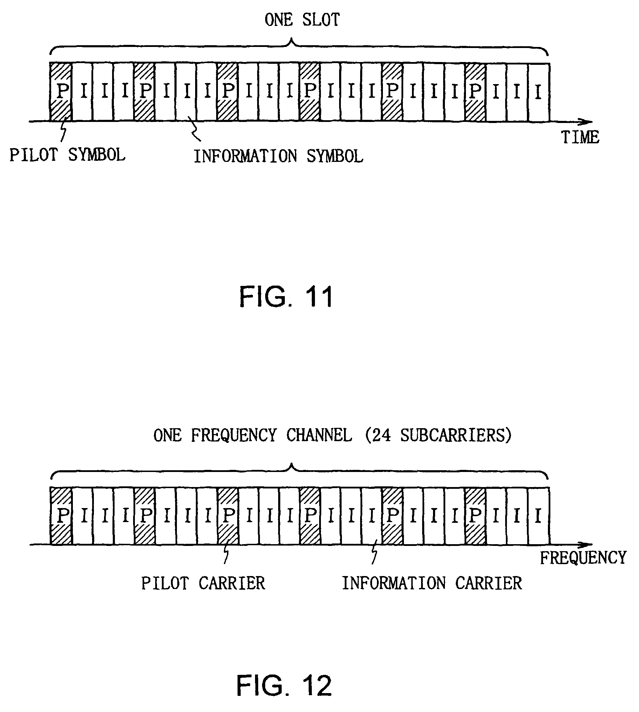

The transmission symbol groups S35 generated by adding pilot symbols P are output to the following inverse fast Fourier transform circuit 51. Because the inverse fast Fourier transform circuit 51 superimposes symbols constituting the transmission symbol groups S35 on the 24 subcarriers described above by distributing them to the subcarriers (because the circuit 51 transmits the symbols of the transmission symbol groups S35 by arranging them on a frequency axis), the circuit 51 applies inverse Fourier transform to each transmission symbol group S35. Thereby, signals in which input symbol groups being arranged on a time base are arranged on a frequency axis are generated. The state of a transmission symbol group S36 generated by applying inverse Fourier transform is shown in Fig. 12. Fig. 12 shows the state of the transmission symbol group S36 on the basis of frequency. From Fig. 12, it is found that 24 symbols comprising pilot symbols P and information symbols I are arranged on a frequency axis and assigned to 24 subcarriers one each.

Moreover, the inverse fast Fourier transform circuit 51 applies windowing to the transmission symbol groups S35 before performing the inverse Fourier transform processing, and thereby controls unnecessary out-of-band spurious. A specific method for windowing is realized by applying cosine roll-off filter to the transmission symbol groups S35 on a time base. Thus, the transmission symbol group S36 generated through the processing by the inverse fast Fourier transform circuit 51 is output to the following transmission circuit 52.

The transmission circuit 52 applies filtering processing to the transmission symbol group S36 and thereafter, applies digital-to-analog conversion processing to the transmission symbol group S36 to generate a transmission signal. Moreover, the transmission circuit 52 generates the transmission signal S30 of a predetermined frequency channel by applying frequency conversion to the transmission signal, amplifies the signal S30 up to a predetermined power, and then transmits the signal S30 through the antenna 43.

Thus, the transmitter 41 performs the multicarrier communication for transmitting information bit series to be transmitted with a plurality of subcarriers at the same time by distributing coded bit groups divided into slots on a plurality of subcarriers and superimposing them to a plurality of subcarriers.

(1-3) Structure of receiver

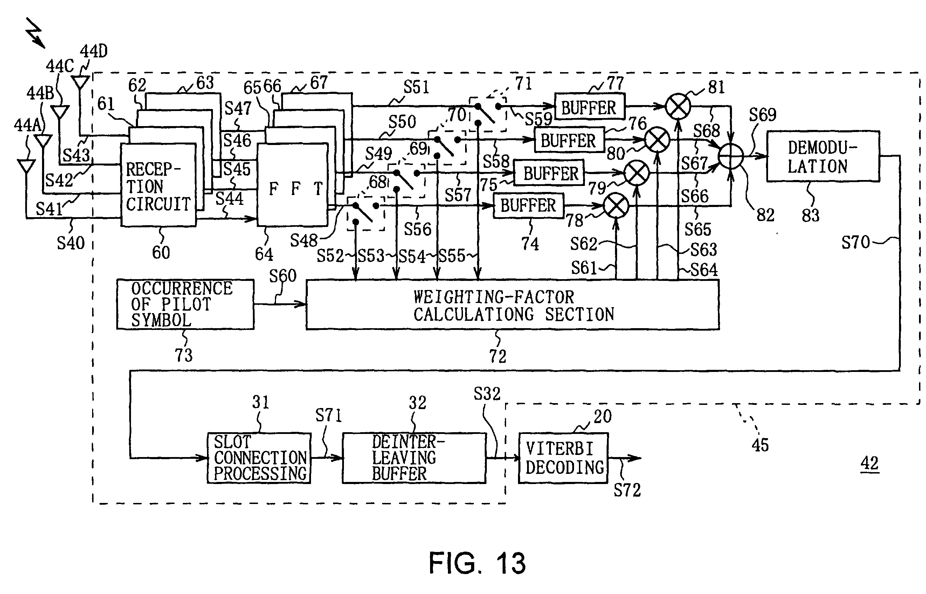

As shown in Fig. 13 in which a portion corresponding to that in Fig. 3 is provided with the same symbol, a receiver 42 mainly comprises four antennas 44A-44D, a received signal processing section 45, and a Viterbi decoding circuit 20. The receiver 42 receives a transmission signal S30 transmitted from a transmitter 41 via the antennas 44A-44D independently, and inputs received signals S40-S43 thereby obtained to the received signal processing section 45. In this case, assume that a transmission signal S31 transmitted from another transmitter 46 is received as an interference wave, and the interference wave component is superimposed on received signals S40-S43. The received signal processing section 45 supplies the received signals S40-S43 to its internal reception circuits 60-63.

After the reception circuit 60 amplifies the received signal S40, it fetches a base band signal by applying frequency conversion to the received signal S40 and applies filtering processing to the base band signal, and then it fetches a received symbol group S44 by applying analog-to-digital conversion processing to the base band signal and outputs the group S44 to a fast Fourier transform circuit (FFT) 64.

Moreover, reception circuits 61-63 amplify input received signals S41-S43, then fetch base band signals by applying frequency conversion to the received signals S41-S43, apply filtering processing to the base band signals, thereafter fetch received symbol groups S45-S47 by applying analog-to-digital conversion processing to the base band signals, and output the groups S45-S47 to fast Fourier transform circuits (FFT) 65-67.

The fast Fourier transform circuit 64 fetches signal components for one slot by applying windowing processing to the input received symbol group S44 and applies Fourier transform to the fetched signal components. Thereby, fetched symbol groups being arranged on a frequency axis can be fetched being arranged them on a time base. Thus, the received symbol group S48 fetched through the Fourier transform performed by the fast Fourier transform circuit 64 is output to a selector switch 68. In this connection, the fast Fourier transform circuit 64 performs windowing processing by applying a cosine roll-off window to the received symbol group S44 on a time base, and thereby makes it possible to control the interference between symbols in a slot.

Moreover, the fast Fourier transform circuits 65-67 fetch signal components for one slot by applying windowing processing to the input received symbol groups S45-S47, fetch received symbol groups S49-S51 in which symbols are arranged on a time base by applying Fourier transform to the fetched signal components, and output the groups S49-S51 to selector switches 69-71.

The selector switch 68 is a switch for separating pilot symbols P included in the received symbol group S48 from information symbols I included in the group S48. The selector switch 68 extracts a symbol group S52 comprising only pilot symbols P by switching the connection state to a weighting-factor calculating section 72 at the timing of a pilot symbol P, outputs the group S52 to the weighting-factor calculating section 72, extracts a symbol group S56 comprising only information symbols I by switching the connection state to a buffer 74 at the timing of the information symbol I, and outputs the group S56 to the buffer 74.

Moreover, the selector switches 69-71 are switches for separating pilot symbols P included in the received symbol groups S49-S51 from information symbols I included in the groups S49-S51. The selector switches 69-71 extract symbol groups S53-S55 comprising only pilot symbols P by switching connection states to output the groups S53-S55 to the weighting-factor calculating section 72, and extracts symbol groups S57-S59 comprising only information symbols I to output them to buffers 75-77.

The buffers 74-77 are respectively constituted with first-in first-out buffers. The buffers 74-77 store symbols of the input symbol groups S56-S59 in their internal storage region in order, read the stored symbol groups S56-S59 according to the signal output timing of the weighting-factor calculating section 72 to be mentioned later, and output the groups S56-S59 to multipliers 78-81 in order.

The weighting-factor calculating section 72 receives a symbol group S60 constituted with symbols equaling to the pilot symbol P inserted into the information symbol group S6 at the transmission side from a pilot symbol generation circuit 73. Then, the weighting-factor calculating section 72 calculates a weighting factor S64 for maximizing the signal-to-interference wave power ratio CIR of the symbol groups S56-S59 (for minimizing the interference wave component) by performing predetermined operation in accordance with the symbol group S60 and the input symbol groups S52-S55 respectively comprising a pilot symbol P, and outputs the factor S64 to the multipliers 78-81. In this connection, the weighting factors S61-S64 calculated by the weighting-factor calculating section 72 are factors respectively comprising a complex number. Moreover, the weighting-factor calculating section 72 calculates the weighting factors S61-S64 for each symbol group.

The multipliers 78-81 remove the interference wave-component from the symbol groups S56-S59 by complex-multiplying the weighting factors S61-S64 by the symbol groups S56-S59 output synchronizing with the output timing of the weighting factors S61-S64 from the buffers 74-77. Then, the multipliers 78-81 output symbol groups S65-S68 thereby obtained to an adder 82.

The adder 82 synthesizes signal components diversity-received via the antennas 44A-44D by adding the symbol groups S65-S68 thus calculated synchronously with each symbol, and outputs a received information symbol group S69 thereby obtained to a demodulation circuit 83.

The demodulation circuit 83 fetches a coded bit group S70 from the received information symbol group S69 by applying predetermined demodulation processing (demodulation processing corresponding to the modulation method performed at the transmission side and corresponding to QPSK modulation, 8PSK modulation, 16QAM, or 64QAM) to the received information symbol group S69, and outputs the group S70 to the slot connection processing circuit 31 at the rear stage.

The slot connection processing circuit 31 is a circuit for connecting the coded bit groups S70 fragmentarily obtained in slots so as to be a continuous signal. The slot connection processing circuit 31 connects the coded bit groups S70 when the groups S70 are accumulated up to a value equivalent to the storage capacity for the deinterleaving buffer 32 of the rear stage, and outputs a coded bit series S71 thereby obtained to the deinterleaving buffer 32.

The deinterleaving buffer 32 has a storage capacity for a plurality of slots, which stores the supplied coded bit series S71 in its internal storage region in order, and then returns the arrangement sequence of the coded bit series S71 to its original arrangement sequence by rearranging the series S71 in accordance with the inverse procedure of the rearrangement performed in the interleaving buffer 6 of the transmitter 41, and outputs coded bit series thereby obtained to the Viterbi decoding circuit 20 as the above-described received bit stream S32.

The Viterbi decoding circuit 20 comprises a soft-decision Viterbi decoding circuit to restore a transmitted information bit series S72 by applying maximum-likelihood series estimation to the input coded bit series S32. In this case, the interference wave component is removed from the symbol groups S56-S59 by multiplying the symbol groups S56-S59 by the weighting factors S61-S64 in the multipliers 78-81 at the front stage, and then the received information symbol group S69 removed the interference wave component is generated by synthesizing the symbol groups S56-S59. Therefore, the interference wave component is also removed from the coded bit series S32 input to the Viterbi decoding circuit 20. Thus, by inputting the coded bit series S32 to the Viterbi decoding circuit 20, it is possible for the Viterbi decoding circuit 20 to accurately perform maximum-likelihood series estimation without being influenced by interference waves, and restore the information bit series S72 more accurately.

(1-4) Structure of weighting-factor calculating section

(1-4-1) Circuit structure

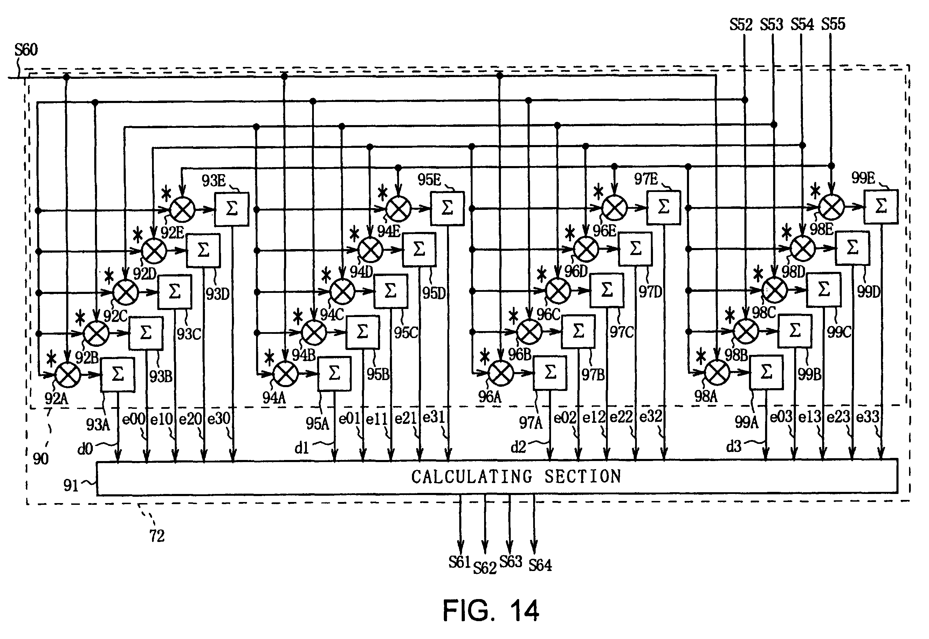

As shown in Fig. 14, the weighting-factor calculating section 72 comprises an expected value calculating section 90 for calculating inter-symbol-group expected values d0-d3 and e00-e33 in accordance with the symbol groups S52-S55 respectively comprising a received pilot symbol P and the symbol group S60 comprising an actually transmitted pilot symbol P. The weighting-factor calculating section 72 also comprises a calculating section 91 for calculating the weighting factors S61-S64 by performing predetermined processing in accordance with the expected values d0-d3 and e00-e33 calculated by the expected value calculating section 90.

The expected value calculating section 90 first inputs the received symbol group S52 to multipliers 92A-92E. The symbol groups S60, S52, S53, S54 or S55 is input to the multipliers 92A-92E as an object for complex multiplication so that the-multipliers 92A-92E perform the complex multiplication between the conjugate value of the symbol group S52 and the symbol group S60, S52, S53, S54, or S55 (symbol "*" in Fig. 14 denotes a conjugate value).

That is, the multiplier 92A performs the complex multiplication between the conjugate value of each symbol of the symbol group S52 and each symbol of the symbol group S60 at every symbol in order, the multiplier 92B performs the complex multiplication between the conjugate value of each symbol of the symbol group S52 and each symbol of the symbol group S52 at every symbol in order, the multiplier 92C performs the complex multiplication between the conjugate value of each symbol of the symbol group S52 and each symbol of the symbol group S53 at every symbol in order, the multiplier 92D performers the complex multiplication between the conjugate value of each symbol of the symbol group S52 and each symbol of the symbol group S54 at every symbol in order, and the multiplier 92E performs the complex multiplication between the conjugate value of each symbol of the symbol group S52 and each symbol of the symbol group S55 at every symbol in order.

Multiplication results of the multipliers 92A-92E are input to cumulative adders 93A-93E where they are cumulatively added for each factor and thereby integrated. After cumulatively adding (integrating) the multiplication result of every symbol constituting one symbol group, the cumulative addition circuits 93A-93E output each integration result to the calculating section 91 as the expected value d0, e00, e10, e20, or e30.

Moreover, the expected value calculating section 90 inputs the received symbol group S53 to multipliers 94A-94E. The symbol groups S60, S52, S53, S54, or S55 is input to the multipliers 94A-94E as an object for complex multiplication, and the multipliers 94A-94E perform the complex multiplication between the conjugate value of the symbol group S53 and the symbol group S60, S52, S53, S54, or S55.

That is, the multiplier 94A performs the complex multiplication between the conjugate value of each symbol of the symbol group S53 and each symbol of the symbol group S60 at every symbol in order, the multiplier 94B performs the complex multiplication between the conjugate value of each symbol of the symbol group S53 and each symbol of the symbol group S52 at every symbol in order, the multiplier 94C performs the complex multiplication between the conjugate value of each symbol of the symbol group S53 and each symbol of the symbol group S53 at every symbol in order, the multiplier 94D performs the complex multiplication between the conjugate value of each symbol of the symbol group S53 and each symbol of the symbol group S54 at every symbol in order, and the multiplier 94E performs the complex multiplication between the conjugate value of each symbol of the symbol group S53 and each symbol of the symbol group S55 at every symbol in order.

Multiplication results of the multipliers 94A-94E are input to cumulative adders 95A-95E where they are cumulatively added for each factor and thereby integrated. After cumulatively adding (integrating) the multiplication result of every symbol constituting one symbol group, the cumulative addition circuits 95A-95E output each integration result to the calculating section 91 as the expected value d1, e01, e11, e21, or e31.

Hereafter in the same way, in the weighting-factor calculating section 72, multipliers 96A-96E perform the complex multiplication between the conjugate value of the symbol group S54 and each of the symbol groups S60, S52, S53, S54, and S55, calculate the expected value d2, e02, e12, e22 or e32 by cumulatively adding the multiplication results with cumulative addition circuits 97A-97E, and input the expected value d2, e02, e12, e22, or e32 to the calculating section 91. Moreover, in the weighting-factor calculating section 72, multipliers 98A-98E perform the complex multiplication between the conjugate value of the symbol group S55 and each of the symbol groups S60, S52, S53, S54, and S55, calculate the expected value d3, e03, e13, e23, or e33 by cumulatively adding the multiplication results with cumulative addition circuits 99A-99E, and output the expected value d3, e03, e13, e23, or e33 to the calculating section 91.

The calculating section 91 calculates the weighting factors S61-S64 by performing predetermined processing in accordance with the expected values d0-d3 and e00-e33 calculated by the expected value calculating section 90. Specifically, the calculating section 91 substitutes the expected values d0-d3 and e00-e33 for the determinant shown in the following Equation (1) to solve the determinant by using a mathematical method such as the Gauss' method, LU method, or Gauss-Jordan method, and calculates complex variables W0-W3.

$$
\begin{pmatrix} e00 & e01 & e02 & e03 \\ e10 & e11 & e12 & e13 \\ e20 & e21 & e22 & e23 \\ e30 & e31 & e32 & e33 \end{pmatrix}
\begin{pmatrix} W0 \\ W1 \\ W2 \\ W3 \end{pmatrix}
=
\begin{pmatrix} d0 \\ d1 \\ d2 \\ d3 \end{pmatrix}
\qquad \cdots \cdots (1)
$$

Moreover, the calculating section 91 outputs the calculated complex variables W0-W3 as the weighting factors S61-S64.

(1-4-2) Weighting-factor calculation procedure by weighting-factor calculating section

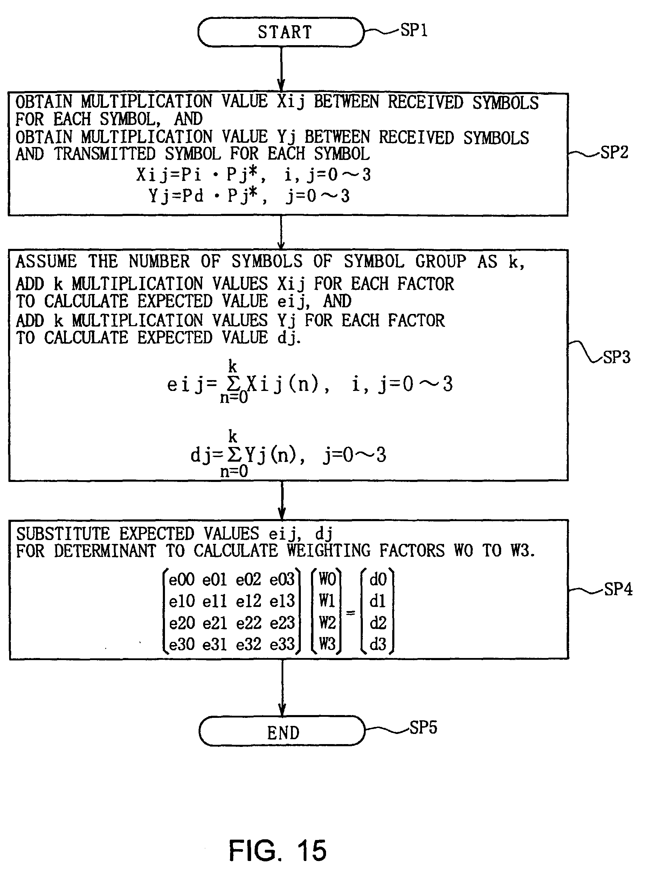

Hereafter, the weighting-factor calculation procedure by the weighting-factor calculating section72 having the above-described structure is described by referring to the flow chart shown in Fig. 15. In this case, assume that the symbol of the received symbol group S52 is P0, the symbol of the symbol group S53 is P1, the symbol of the symbol group S54 is P2, the symbol of the symbol group S55 is P3, and the symbol of the symbol group S60 corresponding to a transmitted pilot symbol is Pd.

First, the weighting-factor calculating section 72 obtains multiplication values Xij between the received symbols P0, P1, P2, and P3 for each symbol in step SP2 starting with step SP1, and moreover obtains multiplication values Yj between the received symbols P0-P3 on one hand and the transmitted symbol Pd on the other for each symbol. In case of the multiplication, the weighting-factor calculating section 72 obtains the multiplication values Xij and Yj by obtaining a conjugate value on one symbol and multiplying the other symbol by the conjugate value. That is, the weighting-factor calculating section 72 calculates multiplication value Xij on every combination by performing the operation shown by the following Equation (2) in order, by assuming variables i and j as i = 0,...,3 and j = 0,...,3.

$$
Xij = Pi \cdot Pj^{*} \qquad \cdots \cdots (2)
$$

where, i, j = 0,...,3

Moreover, the section 72 calculates multiplication value Yj on every combination by performing the operation shown by the following Equation (3) in order.

$$Yj = Pd \cdot Pj^{\bullet} \qquad\qquad \cdots\cdots (3)$$

where, j = 0,...,3

Symbol "∗" shown in the Equations (2) and (3) denotes a conjugate value.

In the next step SP3, by assuming the number of symbols of a symbol group as k (by assuming the number of pilot symbols included in one slot as k), the weighting-factor calculating section 72 calculates an expected value eij by adding k multiplication values Xij for each factor and moreover, calculates an expected value dj by adding k multiplication values Yj for each factor. That is, the weighting-factor calculating section 72 obtains the expected value eij by adding the multiplication value Xij for each factor in accordance with the following Equation (4).

$$eij = \sum_{n=0}^{k} Xij(n) \qquad\qquad \cdots\cdots (4)$$

where, i, j = 0,...,3

Moreover, the section 72 obtains the expected value dj by adding the multiplication value Yj for each factor in accordance with the following Equation (5).

$$dj = \sum_{n=0}^{k} Yj(n) \qquad\qquad \cdots\cdots (5)$$

where, j = 0,...,3

Thereby, the expected values d0-d3 and e00-e33 for combinations between the symbol groups S52-S55 on one hand and the symbol group S60 on the other are calculated.

In the next step SP4, the weighting-factor calculating section 72 substitutes the calculated expected values d0-d3 and e00-e33 for the determinant shown by the above Equation (1), and calculates the weighting factors W0-W3 by solving the determinant. Moreover, the weighting-factor calculating section 72 outputs the calculated weighing factors W0-W3 as the weighting factors S61-S64. When completing the above-described processing, the weighting-factor calculating section 72 starts the next step SP5 to complete the whole processing. In connection, the weighting-factor calculating section 72 performs the weighting-factor calculation procedure shown in Fig. 15 by obtaining the received signal corresponding to one slot whenever the symbol groups S52-S55 are input and calculates the weighting factors W0-W3 for each slot.

(1-4-3) Theory of weighting factor calculation

Then, the theory is described in which the weighting factors W0-W3 capable of minimizing the interference wave component included in the symbol groups S56-S59 can be calculated by substituting the above-described expected values d0-d3 and e00-e33 for the determinant shown by the Equation (1) and solving the determinant.

First, a case is assumed in which the number of antenna elements is K. Moreover, it is assumed that (M+1) signal waves $s_{km}(t)$ arrive in each antenna element, signal waves $s_{k0}(t)$ out of the (M+1) signal waves are desired waves, and the remaining signal waves $s_{k1}(t)$-$s_{km}(t)$ are interference waves. Furthermore, it is assumed that white noises are added to a signal received by each antenna element. Under the above-described conditions, the voltage $y(t)$ of a received signal obtained by synthesizing the signal received by each antenna element can be shown as described below.

First, when it is assumed that the m-th signal wave among the (M+1) signal waves arriving at the k-th antenna element is $s_{km}(t)$ and the white noise added to the k-th antenna element is $n_k(t)$, the signal $x_k(t)$ received by the k-th antenna element is shown by the following Equation (6).

$$x_k(t) = \sum_{m=0}^{M} s_{km}(t) + n_k(t) \qquad \cdots\cdots (6)$$

Moreover, by totalizing values obtained by multiplying each signal $x_k(t)$ by a weighting factor $W_k$, a received signal $y(t)$ is obtained. Therefore, the received signal $y(t)$ is shown by the following Equation (7).

$$y(t) = \sum_{k=0}^{K-1} W_k x_k(t) \qquad \cdots\cdots (7)$$

In this case, when assuming an ideal signal to be originally received as $d(t)$, the mean square error MSE between the ideal signal $d(t)$ and the actually received signal $y(t)$ is shown by the following Equation (8).

$$MSE = E\left[ \left| d(t) - y(t) \right|^2 \right] \qquad \cdots\cdots (8)$$

In this case, E[x] shown in the Equation (8) denotes the expected value of x (time mean value). Moreover, variables $d(t)$, $y(t)$, and $W_k$ are complex numbers.

In the Equation (8), it is found that the received signal $y(t)$ further approaches the ideal signal $d(t)$ as the value of the mean square error MSE decreases. Therefore, by setting the weighting factor $W_k$ so that the means square error MSE is minimized, it is possible to minimize the interference wave component. To obtain the weighting factor $W_k$ for minimizing the mean square error MSE, it is necessary to first partially differentiate the mean square error MSE with the weighting factor $W_k$, and to search the weighting factor $W_k$ for decreasing the value of the partially-differentiated mean square error MSE to "0", that is, the weighting factor $W_k$ for minimizing the mean square error MSE.

The weighting factor $W_k$ is a complex number. Therefore, when showing the weighting factor $W_k$ as the following Equation (9), the result of partially differentiating the mean square error MSE with the weighting factor $W_k$ can be shown by the following Equation (10).

$$W_k = W_k^{Re} + j W_k^{Im} \qquad \cdots\cdots (9)$$

$$\frac{\partial MSE}{\partial W_k} = \left(\frac{\partial}{\partial W_k^{Re}} + j\frac{\partial}{\partial W_k^{Im}}\right) MSE$$

$$= \frac{\partial MSE}{\partial W_k^{Re}} + j\frac{\partial MSE}{\partial W_k^{Im}} \qquad \cdots\cdots (10)$$

To obtain the weighting factor $W_k$ for minimizing the means square error MSE, it is necessary to obtain the weighting factor $W_k$ for the partial differential value to satisfy the following Equation (11).

$$\frac{\partial MSE}{\partial W_k^{Re}} + j\frac{\partial MSE}{\partial W_k^{Im}} = 0 \qquad \cdots\cdots (11)$$

Thus, the obtained weighting factor $W_k$ serves as the weighting factor $W_k$ for minimizing the interference wave component.

In this case, by assuming the number of antenna elements as "4", variable k = 0,...,3. Therefore, the quadruple simultaneous equations shown by the following Equations (12) to (15) are obtained.

$$\frac{\partial MSE}{\partial W_0} = \frac{\partial MSE}{\partial W_0^{Re}} + j\frac{\partial MSE}{\partial W_0^{Im}} = 0 \qquad \cdots\cdots (12)$$

$$\frac{\partial MSE}{\partial W_1} = \frac{\partial MSE}{\partial W_1^{Re}} + j\frac{\partial MSE}{\partial W_1^{Im}} = 0 \qquad \cdots\cdots (13)$$

$$\frac{\partial MSE}{\partial W_2} = \frac{\partial MSE}{\partial W_2^{Re}} + j\frac{\partial MSE}{\partial W_2^{Im}} = 0 \qquad \cdots\cdots (14)$$

$$\frac{\partial MSE}{\partial W_3} = \frac{\partial MSE}{\partial W_3^{Re}} + j\frac{\partial MSE}{\partial W_3^{Im}} = 0 \qquad \cdots\cdots (15)$$

By expanding the equations shown by the Equations (12) to (15) by using a predetermined mathematical method, they can be transformed into the following Equations (16) to (19).

$$\frac{\partial MSE}{\partial W_0} = \sum_{i=0}^{3} E\left[2W_0 x_0(t)x_i^*(t)\right] - E\left[2d(t)x_0^*(t)\right] = 0 \qquad \cdots\cdots (16)$$

$$\frac{\partial MSE}{\partial W_1} = \sum_{i=0}^{3} E\left[2W_1 x_1(t)x_i^*(t)\right] - E\left[2d(t)x_1^*(t)\right] = 0 \qquad \cdots\cdots (17)$$

$$\frac{\partial MSE}{\partial W_2} = \sum_{i=0}^{3} E\left[2W_2 x_2(t)x_i^*(t)\right] - E\left[2d(t)x_2^*(t)\right] = 0 \qquad \cdots\cdots (18)$$

$$\frac{\partial MSE}{\partial W_3} = \sum_{i=0}^{3} E\left[2W_3 x_3(t)x_i^*(t)\right] - E\left[2d(t)x_3^*(t)\right] = 0 \qquad \cdots\cdots (19)$$

The equations shown by the Equations (16) to (19) can be shown as a determinant shown by the following Equation (20).

$$\begin{pmatrix} \dfrac{\partial MSE}{\partial W_0} \\[4pt] \dfrac{\partial MSE}{\partial W1} \\[4pt] \dfrac{\partial MSE}{\partial W2} \\[4pt] \dfrac{\partial MSE}{\partial W3} \end{pmatrix} = 2 \times \begin{pmatrix} E[x_0(t)x_0^{\cdot}(t)] & E[x_0(t)x_1^{\cdot}(t)] & E[x_0(t)x_2^{\cdot}(t)] & E[x_0(t)x_3^{\cdot}(t)] \\ E[x_1(t)x_0^{\cdot}(t)] & E[x_1(t)x_1^{\cdot}(t)] & E[x_1(t)x_2^{\cdot}(t)] & E[x_1(t)x_3^{\cdot}(t)] \\ E[x_2(t)x_0^{\cdot}(t)] & E[x_2(t)x_1^{\cdot}(t)] & E[x_2(t)x_2^{\cdot}(t)] & E[x_2(t)x_3^{\cdot}(t)] \\ E[x_3(t)x_0^{\cdot}(t)] & E[x_3(t)x_1^{\cdot}(t)] & E[x_3(t)x_2^{\cdot}(t)] & E[x_3(t)x_3^{\cdot}(t)] \end{pmatrix} \begin{pmatrix} W_0 \\ W_1 \\ W_2 \\ W_3 \end{pmatrix}$$

$$- 2 \times \begin{pmatrix} E[d(t)x_0^{\cdot}(t)] \\ E[d(t)x_1^{\cdot}(t)] \\ E[d(t)x_2^{\cdot}(t)] \\ E[d(t)x_3^{\cdot}(t)] \end{pmatrix} = \begin{pmatrix} 0 \\ 0 \\ 0 \\ 0 \end{pmatrix} \qquad \cdots\cdots (20)$$

Therefore, the determinant shown by the following Equation (21) can be obtained from the Equation (20).

$$\begin{pmatrix} E[x_0(t)x_0^*(t)] & E[x_0(t)x_1^*(t)] & E[x_0(t)x_2^*(t)] & E[x_0(t)x_3^*(t)] \\ E[x_1(t)x_0^*(t)] & E[x_1(t)x_1^*(t)] & E[x_1(t)x_2^*(t)] & E[x_1(t)x_3^*(t)] \\ E[x_2(t)x_0^*(t)] & E[x_2(t)x_1^*(t)] & E[x_2(t)x_2^*(t)] & E[x_2(t)x_3^*(t)] \\ E[x_3(t)x_0^*(t)] & E[x_3(t)x_1^*(t)] & E[x_3(t)x_2^*(t)] & E[x_3(t)x_3^*(t)] \end{pmatrix} \begin{pmatrix} W_0 \\ W_1 \\ W_2 \\ W_3 \end{pmatrix}$$

$$= \begin{pmatrix} E[d(t)x_0^*(t)] \\ E[d(t)x_1^*(t)] \\ E[d(t)x_2^*(t)] \\ E[d(t)x_3^*(t)] \end{pmatrix} \qquad \cdots \cdots (21)$$

Therefore, by solving the weighting factors $W_0$-$W_3$ in accordance with the Equation (21), it is possible to obtain the weighting factors $W_0$-$W_3$ capable of minimizing the interference wave component.

The expected values $E[X_i(t)X_j^*(t)]$ at the left side of the Equation (21) are expected values of received signals and correspond to the expected values e00-e33 in the above-mentioned Equation (1). In the same way, the expected values $E[d(t)X_j^*(t)]$ at the right side of the Equation (21) are expected values of a signal to be received and an actually received signal, and correspond to the expected values d0-d3 in the above Equation (1). Moreover, the weighting factors $W_0$-$W_3$ correspond to the weighting factors W0-W3 obtained by the Equation (1). Therefore, resultingly, by obtaining the weighting factors W0-W3 by the weighting factor calculating section 72 in accordance with the determinant shown by the Equation (1), it is possible to minimize the interference wave component. That is, it is possible to obtain the weighting factors W0-W3 capable of minimizing the interference wave component.

(1-5) Structure of demodulation circuit

In this section, the structure of the demodulation. circuit 83 is described. The demodulation circuit 83 restores a coded bit by performing the processing reverse to the processing of assigning some coded bits to a symbol at the transmission side in accordance with a predetermined modulation method. The structure of the demodulation circuit 83 is changed correspondingly to the modulation method performed at the transmission side. Therefore, the structure of the circuit 83 is described for each modulation method.

(1-5-1) Structure of demodulation circuit corresponding to QPSK modulation

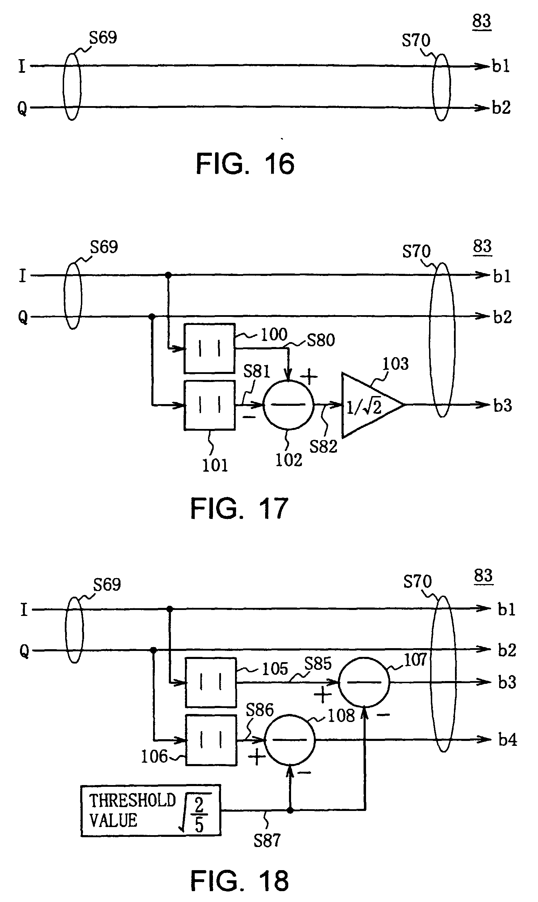

When the modulation method performed at the transmission side uses QPSK modulation, the demodulation circuit 83 is constituted as shown in Fig. 16, directly fetches the components I and Q of each symbol received as the received information symbol group S69 as first and second soft decision bits b1 and b2, and outputs the bits b1 and b2 as the restored coded bit group S70.

(1-5-2) Structure of demodulation circuit corresponding to 8PSK modulation

When the modulation method performed at the transmission side uses 8PSK modulation, the demodulation circuit 83 is constituted as shown in Fig. 17. The demodulation circuit 83 directly fetches the components I and Q of each symbol received as the received information symbol group S69 as first and second soft decision bits b1 and b2. It also fetches a third soft decision bit b3 by applying predetermined processing to the components I and Q, and outputs the fetched first, second, and third soft decision bits b1, b2, and b3 as the restored coded bit group S70.

When the demodulation circuit 83 fetches the third soft decision bit b3, it first inputs the components I and Q to absolute value circuits 100 and 101. The absolute value circuit 100 obtains the absolute value S80 of the component I, and the absolute value circuit 101 obtains the absolute value 81 of the component Q. The circuits 100 and 101 output the absolute values 80 and 81 to a subtracter 102. The subtracter 102 subtracts the absolute value S81 of the component Q from the absolute value S80 of the component I and outputs the difference S82 between the absolute values S80 and S81 to an arithmetic circuit 103. The arithmetic circuit 103 multiplies the difference S82 between components I and Q by $1/\sqrt{2}$ and outputs the arithmetic result as the third soft decision bit b3. Thus, the demodulation circuit 83 makes it possible to obtain the first, second, and third soft decision bits b1, b2, and b3 with a simple structure in accordance with the above processing.

(1-5-3) Structure of demodulation circuit corresponding to 16QAM

When the modulation method performed at the transmission side uses 16QAM, the demodulation circuit 83 is constituted as shown in Fig. 18. The demodulation circuit 83 directly fetches the components I and Q of each symbol received as the received information symbol group S69 as first and second soft decision bits b1 and b2. It also fetches third and fourth soft decision bits b3 and b4 by applying predetermined processing to the components I and Q, and outputs the fetched first, second, third, and fourth soft decision bits b1-b4 as the restored coded bit group S70.

When the demodulation circuit 83 fetches the third and fourth soft decision bits b3 and b4, it first inputs the component I to an absolute value circuit 105 and the component Q to an absolute value circuit 106. The absolute value circuit 105 obtains the absolute value S85 of the component I, and the absolute value circuit 106 obtains the absolute value S86 of the component Q. Then the circuit 105 outputs the absolute value S85 to an subtracter 107 and the circuit 106 outputs the absolute value S86 to a subtracter 108. A value "$\sqrt{2/5}$", for example, is input to the subtracter 107 as a signal-level decision threshold S87. The subtracter 107 subtracts the decision threshold S87 from the absolute value S85 of the component I and outputs the subtraction result as the third soft decision bit b3. Because the signal-level decision threshold S87 is also input to the subtracter 108, the subtracter 108 subtracts the decision threshold S87 from the absolute value S86 of the component Q and outputs the arithmetic result as the fourth soft decision bit b4.

Thus, the demodulation circuit 83 directly uses the values of the components I and Q for the first and second soft decision bits b1 and b2, obtains the third soft decision bit b3 by subtracting the decision threshold S87 from the absolute value S85 of the component I, and obtains the fourth soft decision bit b4 by subtracting the decision threshold S87 from the absolute value S86 of the component Q. Therefore, it is possible to easily obtain the first, second, third, and fourth soft decision bits b1-b4 with a simple structure.

(1-5-4) Structure of demodulation circuit corresponding to 64QAM

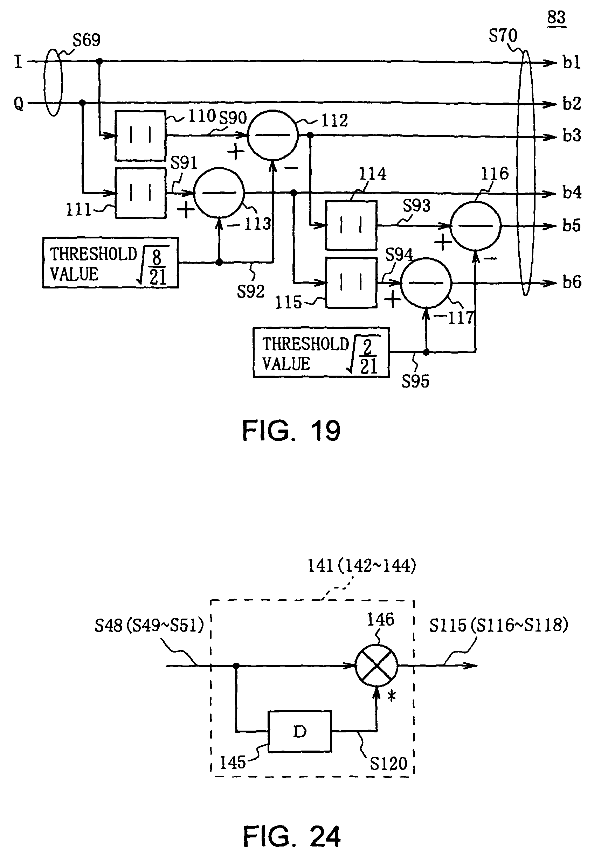

When the modulation method performed at the transmission side uses 64QAM, the demodulation circuit 83 is constituted as shown in Fig. 19. The demodulation circuit 83 directly fetches the components I and Q of each symbol received as the received information symbol group S69 as first and second soft decision bits b1 and b2. It also fetches third, fourth, fifth, and sixth soft decision bits b3-b6 by applying predetermined processing to the components I and Q, and outputs the fetched first to sixth soft decision bits b1-b6 as the restored coded bit group S70.

When the demodulation circuit 83 fetches the third to sixth soft decision bits b3-b6, it first inputs the components I and Q to absolute value circuits 110 and 111. The absolute value circuit 110 obtains the absolute value S90 of the component I and the absolute value circuit 111 obtains the absolute value S91 of the component Q. And then, the circuit 110 outputs the value S90 to a subtracter 112 and the circuit 111 outputs the value S91 to a subtracter 113. A value "$\sqrt{8/21}$", for example, is input to the subtracter 112 as a first signal-level decision threshold S92. The subtracter 112 subtracts the first decision threshold S92 from the absolute value S90 of the I component and outputs the arithmetic result as the third soft decision bit b3, and outputs the arithmetic result to an absolute value circuit 114. Moreover, the first decision threshold S92 is input to the subtracter 113. The subtracter 113 subtracts the first decision threshold S92 from the absolute value S91 of the component Q, outputs the arithmetic result as the fourth soft decision bit b4, and also outputs the arithmetic result to an absolute value circuit 115.

The absolute value circuit 114 obtains the absolute value S93 of the third soft decision bit b3 and the absolute circuit 115 obtains the absolute value S94 of the fourth soft decision bit b4. The circuit 114 outputs the value S93 to a subtracter 116 and the circuit 115 outputs the value S94 to a subtracter 117. A value "$\sqrt{2/21}$", for example, is input to the subtracter 116 as a second signal-level decision threshold S95. The subtracter 116 subtracts the second decision threshold S95 from the absolute value S93 of the third soft decision bit b3 and outputs the arithmetic result as a fifth soft decision bit b5. Moreover, the second decision threshold S95 is input to the subtracter 117. The subtracter 117 subtracts the second decision threshold S95 from the absolute value S94 of the fourth soft decision bit b4 and outputs the arithmetic result as a sixth soft decision bit b6.

Thus, the demodulation circuit 83 directly uses the values of the components I and Q for the first and second soft decision bits b1 and b2, obtains the third soft decision bit b3 by subtracting the first decision threshold S92 from the absolute value S90 of the component I, obtains the fourth soft decision bit b4 by subtracting the first decision threshold S92 from the absolute value S91 of the component Q, obtains the fifth soft decision bit b5 by subtracting the second decision threshold S95 from the absolute value S93 of the third soft decision bit b3, and obtains the sixth soft decision bit b6 by subtracting the second decision threshold S95 from the absolute value S94 of the fourth soft decision bit b4. Therefore, it is possible to easily obtain the first to sixth soft decision bits b1-b6 with a simple structure.

(1-6) Operations and advantages

According to the above-described structure, the receiver 42 independently receives the transmission signal S30 from the transmitter 41 through the antennas 44A-44D and inputs the received signals S40-S43 thereby obtained to the received signal processing section 45. The received signal processing section 45 fetches the received symbol groups S44-S47 from the received signals S40-S43 by applying predetermined reception processing to the received signals S40-S43 and thereafter, fetches the received symbol groups S48-S51 in which symbols are arranged on a time base by applying fast Fourier transform to the received symbol groups S44-S47.

Moreover, the received signal processing section 45 fetches information symbols I from the received symbol groups S48-S51 respectively comprising information symbols I and pilot symbols P, and obtains the received information symbol group S69 by adding the symbol groups S65-S68 respectively comprising only information symbols I with the adder 82 and synthesizing them. Then, the received signal processing section 45 restores the information bit series S72 by applying demodulation processing and decoding processing to the received information symbol group S69. Thus, the receiver 42 makes it possible to avoid the reduction of received power due to fading and preferably perform communication by adding the signal components received via the antennas 44A-44D, and thereby performing diversity reception.

When the transmission signal S31 transmitted by using the same frequency channel as that of the transmission signal S30 of the communication counterpart is present, the antennas 44A-44D also receive the transmission signal S31 as interference waves. The interference wave component of the interference waves is added to the signal component of the information symbol I. A normal receiver could not smoothly restore information bit series due to the interference wave component.

However, the receiver 42 obtains the weighing factors S61-S64 for removing the interference wave component in accordance with pilot symbols P extracted from the received symbol groups S48-S51, multiplies the symbol groups S56-S59 including information symbols I by the weighting factors S61-S64, and thereby removes the interference wave component from the symbol groups S56-S59 of the information symbol I. Thus, the receiver 42 can remove the interference wave component of interference waves even if the interference waves are received, and therefore, it can accurately restore the information bit series S72.

To calculate the weighting factors S61-S64, pilot symbols P are extracted from the received symbol groups S48-S51 received via the antennas 44A-44D and the symbol groups S52-S55 respectively comprising only pilot symbols P are input to the weighting-factor calculating section 72. In addition to the received pilot symbols P, the weighting-factor calculating section 72 receives the same pilot symbols P as those inserted at the transmission side from the pilot symbol generation circuit 73, and calculates expected values of these pilot symbols P in every combination. That is, the weighting-factor calculating section 72 calculates the expected values e00-e33 of the received pilot symbols P, and calculates the expected values d0-d3 of the received pilot symbols P and actually-transmitted pilot symbols P (ideal pilot symbol to be received). Moreover, the weighting-factor calculating section 72 calculates the weighting factors W0-W3 by solving the simultaneous equation shown by the Equation (1) in accordance with the expected values e00-e33 and d0-d3, and outputs the weighting factors W0-W3 as weighting factors S61-S64.

Thus, the expected values e00-e33 and d0-d3 are calculated from pilot symbols P inserted between information symbols I, and the weighting factors S61-S64 are calculated by the arithmetic processing based on the expected values e00-e33 and d0-d3. Therefore, the receiver 42 can easily calculate the weighting factors S61-S64 through simple processing such as arithmetic processing with a simple structure.

Moreover, as understood in the above explanation, the theory of the weighting factor calculation is to confirm the interference wave component superimposed on a pilot symbol P with a parameter referred to as an expected value. Therefore, at the time of transmission, the radio communication system 40 inserts pilot symbols P between information symbols I instead of attaching the pilot symbols P to the head of information symbols I. Thereby, at the reception side, it is possible to uniformly confirm the influence of interference waves over the entire slot and more accurately calculate the weighting factors S61-S64 for removing interference waves.

According to the above structure, the transmission side transmits the transmission symbol S35 obtained by inserting pilot symbols P between information symbols I. The reception side extracts pilot symbols P from each of the received symbols S48-S51 received via the antennas 44A-44D, calculates the weighting factors S61-S64 for minimizing the interference wave component in accordance with the pilot symbols P, and multiplies the received information symbols S56-S59 by the weighting factors S61-S64. Thereby, even if interference waves are received, it is possible to remove the interference wave component from the received information symbols S56-S59 and accurately restore thus transmitted information bit series S72.

(2) Second Embodiment

In the case of the above first embodiment, the structure only for restoring the coded bit group S70 from the received information symbol group S69 is described. In the case of the second embodiment, however, a demodulation circuit having a structure for reflecting the reliability of a transmission line on the restored coded bit group S70 is described.

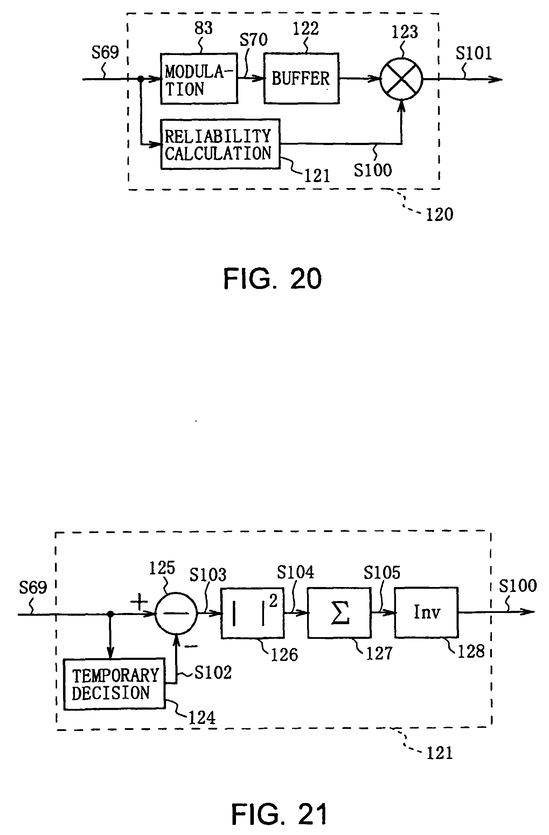

In Fig. 20, symbol 120 denotes a demodulating section of the second embodiment as a whole, which is newly provided with a reliability calculation circuit 121, a buffer 122, and a multiplier 123 in addition to the demodulation circuit 83 described for the above first embodiment. The demodulating section 120 first inputs the received information symbol group S69 output from the adder 82 to the demodulation circuit 83 and the reliability calculation circuit 121.

The demodulation circuit 83 is the same as the circuit described for the first embodiment, which restores the coded bit group S70 from the input received information symbol group S69 by applying predetermined demodulation processing to the group S69, and outputs the restored coded bit group S70 to the rear-stage buffer 122. The buffer 122 comprises a first-in first-out buffer, which stores soft decision bits of the input coded bit groups S70 in its internal storage region in order, reads the stored soft decision bits in order synchronously with the signal output timing of the reliability calculation circuit 121 to be described later, and outputs the soft decision bits to the rear-stage multiplier 123.

The reliability calculation circuit 121 calculates the noise power of the input received information symbol group S69 in accordance with the group S69, and outputs the inverse number of the noise power to the multiplier 123 as a reliability factor S100 showing the reliability of the transmission line through which the received information symbol group S69 is sent. The multiplier 123 multiplies each soft decision bit of the coded bit group S70 read from the buffer 122 by the reliability factor S100 in bits, and outputs the obtained coded bit group S101 to the rear-stage slot connection processing circuit 31. In this connection, since the reliability factor S100 is the inverse number of the noise power, the signal level of the coded bit group S101 after multiplied by the reliability factor S100 becomes a level corresponding to the signal-to-noise power ratio S/N of the transmission line through which the received information symbol group S69 is sent.

Thus, the demodulation circuit 120 calculates the reliability of the transmission line through which the received information symbol group S69 is sent, and multiplies each soft decision bit of the coded bit group S70 by the reliability factor S100 showing the reliability of the transmission line. Therefore, it is possible to adjust the signal level of each bit of the coded bit group S70 to a level corresponding to the reliability of the transmission line, and reflect the reliability of the transmission line on the coded bit group S70. Therefore, by inputting the coded bit group S101 in which the reliability of the transmission line is reflected on the signal level to the rear-stage Viterbi decoding circuit 20, and by performing decoding processing, it is possible to perform maximum-likelihood series estimation including the reliability of the transmission line and restore the information bit series S72 more accurately.

Fig. 21 shows the structure of the reliability calculation circuit 121. As shown in Fig. 21, the reliability calculation circuit 121 inputs the received information symbol group S69 supplied from the adder 82 to a subtracter 125 and a temporary decision circuit 124. The temporary decision circuit 124 decides at which signal point position each symbol input as the received information symbol group S69 is located, and outputs a symbol showing the decided position as a decision symbol S102. For example, when the modulation method at the transmission side uses QPSK modulation, the temporary decision circuit 124 decides to which signal point position a received symbol corresponds among the signal point positions shown in Fig. 7, and outputs a symbol showing the decided position. Moreover, when the modulation method at the transmission side uses 8PSK modulation, 16QAM, or 64QAM, the temporary decision circuit 124 decides to which signal point position a received symbol corresponds among the signal point positions shown in Fig. 8, 9, or 10, and outputs a symbol showing the decided position. The temporary decision circuit 124 outputs a symbol closest to a received symbol as the decision symbol S102.

The subtracter 125 successively subtracts the decision symbols S102 output from the temporary decision circuit 124 from the symbol input as the received information symbol group S69, and outputs subtraction values S103 to a square circuit 126. In this case, since the decision symbol S102 is a symbol to be originally received, the subtraction value S103 output from the subtracter 125 shows the noise component superimposed on a received symbol.

The square circuit 126 calculates the noise power of each symbol by successively squaring the input subtraction values S103 and outputs the noise power of each symbol to a cumulative addition circuit 127 as the noise power S104 per symbol. The cumulative addition circuit 127 cumulatively adds the noise power S104 by the number of symbols of one symbol group (cumulatively adds the noise power S104 for one slot) and outputs the obtained noise power S105 for one slot to an inverse number calculation circuit 128. Thus, by calculating and outputting the inverse number of the noise power S105 with the inverse number calculation circuit 128, the reliability calculation circuit 121 calculates the reliability factor S100.

According to the above-described structure, the demodulating section 120 of the second embodiment calculates the power S105 of the noise component superimposed on the received information symbol group S69 from the received information symbol group S69, and calculates the inverse number of the noise power S105 as a factor showing the reliability of the transmission line through which the received information symbol group S69 is sent. Moreover, the demodulating section 120 multiplies each bit of the coded bit group S70 restored from the received information symbol group S69 by the reliability factor S100 showing the reliability of the transmission line, and thereby adjusts the signal level of the coded bit group S70 to a level corresponding to the reliability of the transmission line.

Thus, by decoding the coded bit group S101, which is adjusted to the signal level corresponding to the reliability of the transmission line, by the rear-stage Viterbi decoding circuit 20, it is possible to perform maximum-likelihood series estimation including the reliability of the transmission line and restore the information bit series S72 more accurately.

According to the above-described structure, the reliability factor S100 showing the reliability of a transmission line is calculated by calculating noise power from the received information symbol group S69, and the received coded bit group S70 is multiplied by the reliability factor S100. Therefore, it is possible to adjust the signal level of the coded bit group S70 to a level corresponding to the reliability of the transmission line and thus, perform maximum-likelihood series estimation including the reliability of the transmission line. Therefore, it is possible to restore the information bit series S72 more accurately.

(3) Other Embodiments

(3-1) For the above-described embodiments, a case is described in which the transmission symbol group S35 generated by inserting pilot symbols P between information symbols I is transmitted through the inverse fast Fourier transform circuit 51 and transmission circuit 52, and the information symbols S56-S59 are extracted from the received symbol groups S48-S51 obtained through the reception circuits 60-63 and the fast Fourier transform circuits 64-67 at the reception side. However, the present invention is not restricted to the above-described case. It is also possible to transmit the transmission symbol group S35 by applying differential modulation to the group S35 and apply differential modulation to each of the received symbol groups S48-S51 at the reception side and thereafter, extract the information symbols S56-S59 from the received symbol groups S48-S51. This point is specifically described below.

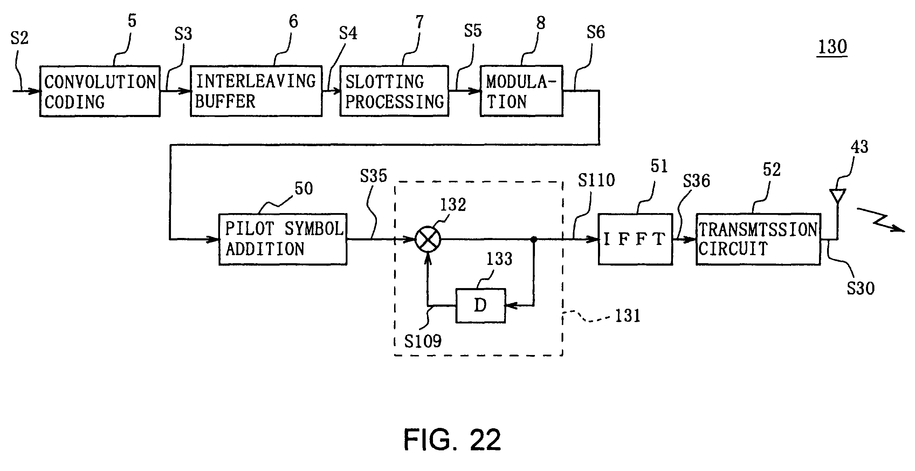

In Fig. 22 in which a portion corresponding to that in Fig. 6 is provided with the same symbol, symbol 130 denotes a transmitter as a whole. The transmitter 130 inputs the transmission symbol group S35, into which pilot symbols P are inserted, to a differential modulation circuit 131 to apply differential modulation to the transmission symbol group S35. The differential modulation circuit 131 first inputs the transmission symbol group S35 to a multiplier 132. A delayed symbol S109 one symbol before is input to the multiplier 132 through a delay circuit 133. The multiplier 132 applies differential modulation to the transmission symbol group S35 by complex-multiplying the symbol S109 one symbol before by symbols of the input transmission symbol group S35, and outputs a transmission symbol group S110 thereby obtained to the inverse fast Fourier transform circuit 51 and the delay circuit 133. In this case, because the symbol one symbol before is complex-multiplied by the input symbols, actual symbol information is superimposed on the difference between the symbols output as the transmission symbol group S110.

Thus, the transmitter 130 generates the transmission symbol group S36 by applying inverse Fourier transform to the transmission symbol group S110 to which differential modulation is thus applied, and generates the transmission signal S30 by applying predetermined transmission processing to the transmission symbol group S36 to transmit the signal S30.

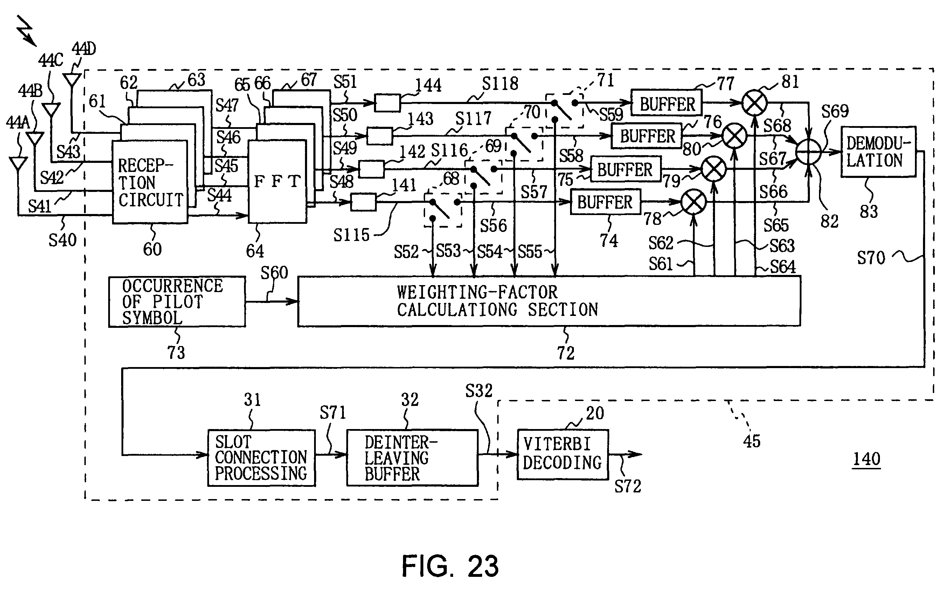

As shown in Fig. 23 in which a portion corresponding to that in Fig. 13 is provided with the same symbol, a receiver 140 has differential demodulation circuits 141-144 in the rear stage of fast Fourier transform circuits 64-67, applies differential demodulation to the received symbol groups S48-S51 with the differential demodulation circuits 141-144, and extracts pilot symbols P and information symbols I from received symbol groups S115-S118 thereby obtained.

As shown in Fig. 24, the differential demodulation circuit 141 inputs the received symbol group S48 supplied from the fast Fourier transform circuit 64 to a delay circuit 145 and a multiplier 146. The multiplier 146 applies differential demodulation to symbols of the received symbol group S48 by performing complex multiplication between the conjugate value of the symbol S120 one symbol before delayed through the delay circuit 145 and the symbols of the input received symbol group S48, and outputs the received symbol group S115 thereby obtained. In this case, because an input signal is complex-multiplied by the conjugate value of the symbol one symbol before, the difference between the input symbol and the symbol one symbol before is obtained and as a result, differential demodulation processing is performed. In this connection, the differential demodulation circuits 142-144 also have the same structure as the differential demodulation circuit 141 shown in Fig. 24.

Thus, the receiver 140 restores the transmitted information bit series S72 by applying differential demodulation to the received symbol groups S48-S51 with the differential demodulation circuits 141-144 and moreover applying the same processing as that of the first embodiment to the received symbol groups S115-S118.

Thus, by applying differential modulation to transmission symbols at the transmission side and differential demodulation to received symbols at the reception side, the difference between adjacent symbols can be obtained. Therefore, even if frequency selective fading occurs in a transmission line, it is possible to decrease the fluctuation received due to the frequency selective fading by obtaining the difference between symbols. Thus, because differential modulation is performed at the transmission side and differential demodulation is performed at the reception side, even if frequency selective fading occurs, it is possible to reduce the influence of the fading and restore the information bit series S72 accurately.

(3-2) Moreover, in the case of the above-described embodiment, a case is described in which diversity reception is performed by providing four antennas 44A-44D for the receiver 42. However, the present invention is not restricted to the above case. It is enough to use at least two antennas. In this connection, because a weighting factor for removing the interference wave component is calculated in accordance with the pilot symbol included in a signal received by each antenna, it is estimated that the interference wave component can be more accurately removed as the number of antennas increases. Moreover, when applying the present invention to a cellular radio communication system, it is enough to use six antennas at most and it is estimated that use of three to six antennas is effective and practical. The cellular radio communication system is a radio communication system in which an area for providing communication services is divided into cells with a desired size, a base station serving as a fixed radio station is set in each cell, and a communication terminal serving as a mobile radio station performs radio communication with the base station in a cell in which the terminal is present.

(3-3) Furthermore, in the case of the above-described embodiment, a case is described in which pilot symbols P are inserted between information symbols I at equal intervals. However, the present invention is not restricted to the above case. It is also possible to insert pilot symbols P between information symbols I at random intervals. In short, by properly distributing and inserting pilot symbols P into information symbols I, it is possible to obtain the advantage same as the above.

(3-4) Furthermore, in the case of the above-described embodiment, a case is described in which a pilot symbol P having an amplitude "1" and a phase being random in every communication is inserted between information symbols I. However, the present invention is not restricted to the above case. For example, it is possible to insert pilot symbols perpendicular to each other every communication to predetermined inserted positions as long as an environment having only a small propagation delay and being synchronous with other communication (for example, an environment in which the present invention is applied to a cellular radio communication system and base stations are temporally synchronized each other) is used. By specifying pilot symbols as described above, it is possible to decrease the number of pilot symbols compared to the case of randomizing pilot symbols in every communication.

(3-5) Furthermore, in the case of the above-described embodiment, a case is described in which 24 subcarriers are used. However, the present invention is not restricted to the above case. It is also possible to use any number of subcarriers.

(3-6) Furthermore, in the case of the above-described embodiment, a case is described in which the convolution coding circuit 5 is used as a coding circuit and the Viterbi decoding circuit 20 is used as a decoding circuit. However, the present invention is not restricted to the above case. It is also possible to use other coding circuit such as a turbo code or decoding circuit. In short, the same advantage as the above can be obtained by using coding for increasing the distance between series at the transmission side and using a coding/decoding method for decoding coded bit series in accordance with maximum-likelihood series estimation at the reception side.

(3-7) Furthermore, in the case of the above-described embodiment, a case is described in which the transmission symbol S35 is transmitted by using a frequency channel comprising a plurality of subcarriers. However, the present invention is not restricted to the above case. It is also possible to change frequency channels used for each slot at random, that is, perform so-called frequency hopping. Thus, by performing the frequency hopping, it is possible to reduce the probability of receiving interference waves. Therefore, it is more effective to avoid the influence of interference waves.

(3-8) Furthermore, in the case of the above-described embodiment, a case is described in which the present invention is applied to the so-called multicarrier-type radio communication system of dispersedly superimposing the information to be transmitted on a plurality of subcarriers and transmitting the subcarriers. However, the present invention is not restricted to the above case. Even when another communication method such as the TDMA method is used, it is also possible to obtain the same advantage as the above mentioned case by calculating a weighting factor for minimizing the interference wave component in accordance with the pilot symbol received as described above and removing the interference wave component.

In short, the same advantage as the case described above can be obtained by providing the following means for a receiver: a plurality of antenna means for generating information symbols by applying predetermined modulation to coded bits generated from information bits, moreover generating transmission symbols by inserting a known pilot symbol between the information symbols at the reception side, and receiving transmission signals generated by applying predetermined transmission processing to the transmission symbols; received-signal processing means for extracting pilot symbols from the signals received by the antenna means, calculating a weighting factor for minimizing the interference wave component in accordance with each extracted pilot symbol, removing the interference wave component from the information symbols by multiplying the information symbol extracted from each received signal by the weighting factor, thereafter generating a received information symbol by synthesizing the information symbols and restoring the coded bits by applying predetermined demodulation processing to the received information symbol; and decoding means for restoring an information bit by applying maximum-likelihood series estimation to a coded bit output from the received-signal processing means.

Moreover, the same advantage as the case described above can be obtained from a radio communication system by providing the following means for a transmitter: coding means for generating coded bits by applying coding processing to information bits; modulation means for generating information symbols by applying predetermined modulation processing to the coded bits; pilot symbol addition means for generating transmission symbols by inserting a known pilot symbol between the information symbols at the reception side; and transmission means for generating transmission signals by applying predetermined transmission processing to the transmission symbols, and transmitting the transmission symbols; and moreover, providing the following means for a receiver: a plurality of antenna means for receiving transmission signals, received-signal processing means for extracting a pilot symbol from each signal received by the antenna means, calculating a weighting factor for minimizing the interference wave component in accordance with each extracted pilot symbol, removing the interference wave component from the information symbol by multiplying the information symbol extracted from each received signal by the weighting factor and thereafter, generating a received information symbol by synthesizing the information symbols, and restoring a coded bit by applying predetermined demodulation processing to the received information symbol; and decoding means for restoring the information bit by applying maximum-likelihood series estimation to the coded bits.

Furthermore, the same advantage as the case described above can be obtained from a communication method by applying predetermined modulation processing to a coded bit generated from an information bit and thereby generating an information symbol, generating a transmission symbol by inserting a known pilot symbol between the information symbols at the reception side, transmitting a transmission signal generated by applying predetermined transmission processing to the transmission symbol, and at the reception side, receiving transmission signals through a plurality of antenna means, extracting a pilot symbol from each received signal, calculating a weighting factor for minimizing the interference wave component in accordance with each extracted pilot symbol, multiplying the information symbol extracted from each received signal by the weighting factor and thereby, removing the interference wave component from the information symbols and thereafter, synthesizing the information symbols and thereby generating a received information symbol, applying predetermined demodulation processing to the received information symbol and thereby, restoring the coded bit, applying maximum-likelihood series estimation to the coded bit, and thereby restoring the information bit.

As described above, according to the present invention, a pilot symbol inserted at the transmission side is extracted from each received signal, a weighting factor for minimizing the interference wave component in accordance with each extracted pilot symbol is calculated, the information symbol extracted from each received signal is multiplied by the weighting factor, and thereby the interference wave component can be easily removed from the information symbol. Thus, even if interference waves are received, it is possible to easily remove the interference wave component from received signals. Thus, transmitted information bit can be restored accurately by removing the influence of interference waves.

While there has been described in connection with the preferred embodiments of the invention, it will be obvious to those skilled in the art that various changes and modifications may be aimed, therefore, to cover in the appended claims all such changes and modifications as fall within the true spirit and scope of the invention.

## Claims

1. A receiver comprising:

   a plurality of antenna means (44) for receiving a transmitted signal generated by inserting pilot symbols between information symbols to generate a transmission symbol and applying predetermined processing to said transmission symbol;

received-signal processing means (45) for extracting said pilot symbol from the signal received by each of said antenna means (44), calculating a weighting factor for minimizing the interference wave component in accordance with each extracted pilot symbol, removing the interference wave component from said information symbol by multiplying said information symbol extracted from each of said received signals by said weighting factor, thereafter generating a received information symbol by synthesizing said information symbol, and restoring said coded bit by applying predetermined demodulation processing to said received information symbol; and decoding means (20) for restoring said information bit by applying maximum-likelihood series estimation to said coded bit output from said received-signal processing means (45).

2.  The receiver according to claim 1, wherein

said received-signal processing means (45) calculates expected values of symbols in accordance with the pilot symbol extracted from each of said received signals and a symbol equaling to the pilot symbol inserted at the transmission side, and calculate said weighting factor for minimizing the interference wave component in accordance with said expected values.

3.  The receiver according to claim 1 or 2, wherein

said received-signal processing means (45) calculates a noise power included in said received information symbol, and reflects the reliability of a transmission line on the signal level of said coded bit by calculating a reliability factor showing the reliability of a transmission line in accordance with said noise power and multiplying said coded bit by said reliability factor.

4.  The receiver according to anyone of claims 1 to 3, wherein

said received-signal processing means (45) applies differential demodulation processing to received symbols fetched from each of said received signals when said transmission symbol is differential-modulated, and then extracts said pilot symbol and said information symbol from each of said received symbols.

5.  A radio communication system comprising:

a transmitter (41) having;
coding means (5) for generating a coded bit by applying coding processing to an information bit, modulation means (8) for generating an information symbol by applying predetermined modulation processing to said coded bit, pilot symbol addition means (50) for generating a transmission symbol by inserting pilot symbols known at the reception side between said information symbols, and transmission means (52) for generating and transmitting a transmission signal by applying predetermined transmission processing to said transmission symbol, and a receiver (42) having;
a plurality of antenna means (44) for respectively receiving said transmission signal,
received-signal processing means (45) for extracting said pilot symbol from the signal received by each of said antenna means (44) , calculating a weighting factor for minimizing the interference wave component in accordance with each extracted pilot symbol, removing the interference wave component from said information symbol by multiplying said information symbol extracted from each of said received signals by said weighting factor, thereafter generating a received information symbol by synthesizing said information symbol, and restoring said coded bit by applying predetermined demodulation processing to said received information symbol, and demodulation means (83) for restoring said information bit by applying maximum-likelihood series estimation to said coded bit output from said received-signal processing means.

6.  The radio communication system according to claim 5, wherein

said received-signal processing means (45) calculates expected values of symbols in accordance with the pilot symbol extracted from each of said received signal and a symbol equaling to the pilot symbol inserted at the transmission side, and calculates said weighting factor for minimizing the interference wave component in accordance with said expected values.

**7.** The radio communication system according to claim 5 or 6, wherein

said received-signal processing means (45) calculates a noise power included in said received information symbol, and reflects the reliability of a transmission line on the signal level of said coded bit calculating a reliability factor showing the reliability of a transmission line in accordance with said noise power and multiplying said coded bit by said reliability factor.

**8.** The radio communication system according to anyone of claims 5 to 7, wherein

said transmitter (41) comprises differential modulation means (8) and transmits said transmission symbol to which differential modulation processing is applied by said differential modulation means (8), and the received-signal processing means (45) of said receiver (42) applies differential demodulation processing to received symbols fetched from each of said received signals, and then extracts said pilot symbol and said information symbol from each of said received symbols.

**9.** The radio communication system according to anyone fo claims 5 to 8, wherein

said pilot symbol is a symbol varying in each communication.

**10.** The radio communication system according to anyone of claims 5 to 9, wherein

said pilot symbol is one of the symbols perpendicular to each other in each communication and it is inserted to a predetermined inserting position.

**11.** A communication method comprising the steps of:

generating an information symbol by applying predetermined modulation processing to a coded bit generated from an information bit, generating a transmission symbol by inserting pilot symbols known at the reception side between said information symbols, and transmitting a transmission signal generated by applying predetermined transmission processing to said transmission symbol; and at the reception side (42), receiving (44) said transmission signal with each of antenna means (44), extracting said pilot symbol from each received signal, calculating a weighting factor for minimizing the interference wave component in accordance with each extracted pilot symbol, removing the interference wave component from said information symbols by multiplying said information symbol extracted from each received signal by said weighting factor, thereafter generating received information symbols by synthesizing said information symbols, restoring said coded bit by applying predetermined demodulation processing to said received information symbols, and restoring said information bit by applying maximum-likelihood estimation to said coded bit.

**12.** The communication method according to claim 11, wherein

expected values of symbols are calculated in accordance with the pilot symbol extracted from each of said received signals and a symbol equaling to the pilot symbol inserted at the transmission side, and said weighting factor for minimizing the interference wave component is calculated in accordance with said expected values.

**13.** The communication method according to claim 11 or 12, wherein

a noise power included in said received information symbol is calculated, and the reliability of a transmission line is reflected on the signal level of said coded bit by calculating a reliability factor showing the reliability of a transmission line in accordance with said noise power and multiplying said coded bit by said reliability factor.

**14.** The communication method according to anyone of claims 11 to 13, wherein

at the transmission side (41), said transmission symbol is transmitted by applying differential modulation processing to the symbol,
at the reception side (42), differential demodulation processing is applied to received symbols fetched from each of said received signals, and then said pilot symbol and said information symbol are extracted from each of said received symbols.

**15.** The communication method according to anyone of claims 11 to 14, wherein

said pilot symbol is a symbol varying in each communication.

**16.** The communication method according to anyone of claims 11 to 15, wherein

said pilot symbol is one of the symbols perpendicular to each other in each communication and is inserted to a predetermined inserted position.

**17.** A receiving method comprising the steps of:

receiving a transmission signal with each of antenna means (44) wherein said transmission signal is generated by applying predetermined modulation processing to a coded bit generated from an information bit to generate an information symbol, inserting pilot symbols known at the reception side between said information symbols to generate a transmission symbol, and applying predetermined transmission processing to said transmission; extracting said pilot symbol from each received signal; calculating a weighting factor for minimizing the interference wave component in accordance with each extracted pilot symbol; removing the interference wave component from said information symbols by multiplying said information symbol extracted from each received signal by said weighting factor; thereafter generating received information symbols by synthesizing said information symbols; restoring said coded bit by applying predetermined demodulation processing to said received information symbols; and restoring said information bit by applying maximum-likelihood estimation to said coded bit.

**18.** The receiving method according to claim 17, wherein expected values of symbols are calculated in accordance with the pilot symbol extracted from each of said received signals and a symbol equaling to the pilot symbol inserted at the transmission side, and said weighting factor for minimizing the interference wave component is calculated in accordance with said expected values.

**19.** The receiving method according to claim 17 or 18, wherein a noise power included in said received information symbol is calculated, and the reliability of a transmission line is reflected on the signal level of said coded bit by calculating a reliability factor showing the reliability of a transmission line in accordance with said noise power and multiplying said coded bit by said reliability factor.

**20.** The receiving method according to anyone of claims 17 to 19, wherein

said transmission signal transmitted by applying differential modulation processing to said transmission symbol is received,
differential demodulation processing is applied to
received symbols fetched from each of said received signals, and then said pilot symbol and said information symbol are extracted from each of said received symbols.

**21.** The receiving method according to anyone of claims 17 to 20, wherein

said pilot symbol is a symbol varying in each communication.

**22.** The receiving method according to claims 17 to 21, wherein

said pilot symbol is one of the symbols perpendicular to each other in each communication and is inserted to a predetermined inserted position.

FIG. 1 (PRIOR ART)

FIG. 2 (PRIOR ART)

FIG. 3 (PRIOR ART)

FIG. 4 (PRIOR ART)

FIG. 5

FIG. 6

**FIG. 7**

**FIG. 8**

FIG. 9

FIG. 10

ONE SLOT

P I I I P I I I P I I I P I I I P I I I P I I I

TIME

PILOT SYMBOL　　　INFORMATION SYMBOL

# FIG. 11

ONE FREQUENCY CHANNEL (24 SUBCARRIERS)

P I I I P I I I P I I I P I I I P I I I P I I I

FREQUENCY

PILOT CARRIER　　　INFORMATION CARRIER

# FIG. 12

FIG. 13

FIG. 14

START ～SP1

OBTAIN MULTIPLICATION VALUE Xij BETWEEN RECEIVED SYMBOLS
FOR EACH SYMBOL, AND
OBTAIN MULTIPLICATION VALUE Yj BETWEEN RECEIVED SYMBOLS
AND TRANSMITTED SYMBOL FOR EACH SYMBOL ～SP2
$$Xij = Pi \cdot Pj^*, \quad i, j = 0 \sim 3$$
$$Yj = Pd \cdot Pj^*, \quad j = 0 \sim 3$$

ASSUME THE NUMBER OF SYMBOLS OF SYMBOL GROUP AS k,
ADD k MULTIPLICATION VALUES Xij FOR EACH FACTOR
TO CALCULATE EXPECTED VALUE eij, AND
ADD k MULTIPLICATION VALUES Yj FOR EACH FACTOR
TO CALCULATE EXPECTED VALUE dj. ～SP3

$$eij = \sum_{n=0}^{k} Xij(n), \quad i, j = 0 \sim 3$$

$$dj = \sum_{n=0}^{k} Yj(n), \quad j = 0 \sim 3$$

SUBSTITUTE EXPECTED VALUES eij, dj
FOR DETERMINANT TO CALCULATE WEIGHTING FACTORS W0 TO W3. ～SP4

$$\begin{bmatrix} e00 & e01 & e02 & e03 \\ e10 & e11 & e12 & e13 \\ e20 & e21 & e22 & e23 \\ e30 & e31 & e32 & e33 \end{bmatrix} \begin{bmatrix} W0 \\ W1 \\ W2 \\ W3 \end{bmatrix} = \begin{bmatrix} d0 \\ d1 \\ d2 \\ d3 \end{bmatrix}$$

END ～SP5

# FIG. 15

FIG. 16

FIG. 17

FIG. 18

**FIG. 19**

**FIG. 24**

## FIG. 20

## FIG. 21

FIG. 22

FIG. 23

EP 0 896 440 A2